# EUROPEAN PATENT APPLICATION

(11) **EP 1 286 537 A2**
(43) Date of publication of application: **26.02.2003**
(21) Application number: 01310429.4
(22) Date of filing: 13.12.2001
(51) Int. Cl.: H04N 5/00, H04N 7/16

(54) **Routing and processing data**

(30) Priority: 21.08.2001 EP 01402202
(71) Applicant: Canal+ Technologies Société Anonyme, 75906 Paris Cedex 15 (FR)
(72) Inventor: Surcouf, André, 75906 Paris, CEDEX 15 (FR); Proust Laurent, 75906 Paris, CEDEX 15 (FR); Letourneur, Patrice, 75906 Paris, CEDEX 15 (FR); Lecrom, François, 75906 Paris, CEDEX 15 (FR); Meric, Jérome, 75906 Paris, CEDEX 15 (FR)
(74) Representative: Cozens, Paul Dennis

(57) **Abstract**

The present invention discloses a routing apparatus (8070) for routing data in a receiver/decoder. The routing apparatus comprises means for receiving realtime user routing control information (8092) and means for routing (8072) the data from an input (8010,8012) to an output (8078), to storage means, and to both the output and the storage means (2100) in accordance with the received realtime user routing control information. In other aspects, a command for controlling a data transfer of a bit stream between a source and a destination, where the command is adapted to change at least one of the source and destination of the transfer, and apparatus for receiving and processing data comprising means for receiving the data and means for synchronising the data in two or more different modes, are also disclosed.

## Description

The present invention relates to routing apparatus, and a receiver/decoder, a method of routing data. In a further aspect, the invention relates to a command, a controller, a method of storing a section of an incoming bit stream, and a method of reading a programme or other defined section of a stored bit stream. The invention extends to apparatus for receiving and processing data, a video device, and a service device. The invention also relates to a computer program product, a computer readable medium, a signal tangibly embodying a computer program product, and a broadcast system. It has particular application in the field of audiovisual bit streams such as those found in digital television systems.

Digital television systems transmit television channels to the viewer in digital, rather than analogue, form. The digital channels are encoded into a digital data stream at the transmitter end, and are decoded at the receiver end using a digital receiver/decoder. To allow interactivity, an uplink may be provided, either via the same medium that delivers the television channels, or else via a different medium such as a telephone link. Further types of data, such as digital audio, software and interactive data can be or are also broadcast. As used herein, the term "digital television system" includes for example any satellite, terrestrial, cable and other system.

The term "receiver/decoder" as used herein may connote a receiver for receiving either encoded or non-encoded signals, for example television and/or radio signals, preferably in MPEG format, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4, and the MPEG-4 and other contemplated MPEG standards. In the context of the present patent application, the term includes all variants, modifications or developments of MPEG formats applicable to the field of digital data transmission.

According to one aspect of the invention, there is provided routing apparatus for routing data in a receiver/decoder, comprising means (such as a processor and associated memory) for receiving realtime user routing control information and means (such as the same or a further processor and associated memory) for routing the data from an input to an output, to storage means (such as the same or a further memory), and to both the output and the storage means in accordance with the received realtime user routing control information.

By providing realtime user routing control the routing apparatus can provide increased control and flexibility over the routing of data. The user is thus able to arrange the routing configuration of the apparatus, and hence determine where data is routed within the apparatus, in realtime.

By "realtime" is meant that preferably any delay between reception of user routing control information and the consequent processing of the information is, from a practical point of view, insignificant to the user. The user is thus preferably under the impression that as soon as routing control information is received by the routing apparatus, it is processed, and the routing configuration is accordingly altered.

Preferably, the data is in the form of a digital data stream, containing programmes or applications.

More preferably, the data is in the form of digital audio/visual data such as, for example, a digital television programme.

Typically, a digital television programme may include subtitle, teletext, synchronisation and other data transmitted in close relation to audio and visual components which together make up the digital television programme.

The term "audio/visual" as used herein preferably connotes either audio or visual matter, or a combination of the two. In the context of a broadcast signal received by a receiver/decoder, the term may encompass subtitle, teletext, synchronisation and other data transmitted in close relation to audio and video components making up a television programme.

Preferably, the routing apparatus comprises means (such as a processor and associated memory) for writing data to the storage means. Thus, data may be recorded on the storage means.

Also preferably, the routing apparatus comprises means (such as a processor and associated memory) for retrieving data from the storage means. Thus data may be retrieved from the storage means.

Preferably, the routing means is adapted to route data from the storage means to the output. In this way, a programme that has been routed to the storage means, and recorded, can later be retrieved from the storage means and routed to the output for viewing.

Thus the user may at first route a television programme to the output for live viewing and, if desired, later reroute the programme instead to the storage means for recording. Subsequently, the programme may be retrieved from the storage means and routed to the output for viewing. Furthermore, it is possible to initially route a programme to the output, and then later route it to both the output for live viewing, and to the storage means for recording.

Preferably, the routing means is adapted to route data to a time-shift storage area, to a record storage area, and to both the time-shift and the record storage areas, of the storage means. Thus data routed to the storage means can be handled separately.

Also preferably, the routing means is further adapted to route data from the time-shift storage area and the record storage area to the output. In this way data may be independently routed from each storage area to the output, thereby providing increased functionality.

Preferably, the routing apparatus further comprises means (such as a processor and associated memory) for receiving user time-shift control instructions. By providing means for receiving time-shift control instructions, the apparatus can provide a user with control over data.

By "time-shift" is preferably meant any processing or manipulation of live data with respect to time, that is the ability to treat live data in a similar fashion to recorded data. Thus, for example, a live programme may be paused and then later resumed.

Preferably, the routing means is adapted to route data to the storage means on the basis of the received user time-shift control instructions.

More preferably, the routing means may be adapted to route data to the time-shift storage area of the storage means, on the basis of the received user time-shift control instructions. In this way data for time-shift purposes may be stored separately.

Preferably, the user time-shift control instructions comprise at least any of the following instructions: pause; play; rewind and forward. By providing a set of common time-shift control instructions (or commands), the apparatus can provide a user with flexible control over live data. It is also preferably possible to rewind and fast forward at different speeds.

Thus, it is possible for a user to route a programme to the output for live viewing, and to the storage means for recording in the record storage area. Furthermore, in realtime, a user is able to route a programme to the time-shift storage area, thereby to enable time-shifting of the programme. Thus, for example, if a user is watching a programme live, while recording the programme, it is also possible to pause the live programme, thereby causing the programme to be routed to the time-shift storage area, and then later resume the programme, which is then routed from the time-shift storage area to the output.

Preferably, the routing apparatus comprises means in the form of a single user interface for receiving realtime user routing control information and user time-shift control instructions. A single user interface, typically in the form of a remote control, is advantageous in that it can simplify control of the apparatus.

Preferably, the routing apparatus further comprises at least one further input, and the routing means is preferably adapted, for each input, to route data from that input to the output, to the storage means, and to both the output and the storage means.

By enabling data from multiple inputs to be selectively routed through the apparatus, further flexibility can be provided. Thus, data from multiple sources can be simultaneously routed to the output, to the storage means, and to both the output and the storage means. Furthermore, this feature in combination with the realtime user routing control capabilities of the apparatus can provide a flexible means of arranging the routing of independent data streams within the receiver/decoder, thereby providing a user with a variety of viewing and recording options which can all be selected at will and in realtime.

Thus, for example, a user can initially route a first programme to the output for live viewing, and a second programme to the storage means for recording, and later, in realtime, also route the first programme to the storage means for recording. In this way, a first programme can be watched live while a second programme is being recorded, and if desired, it is possible to begin recording the second programme at some later time. Furthermore, it is also possible for a user to select, in realtime, which programme is viewed live. Thus, it is possible, for example, to route the second programme to the output for live viewing, instead of the first.

In addition, it is also possible to route either of the programmes being viewed live to the time-shift storage area and hence time-shift the live programme.

Furthermore, it is also possible to route two programmes to the output for live viewing.

Also preferably, the routing means is adapted to route data from each input independently of data from other inputs. Thus, at least two programmes can be independently routed, in realtime, by the user to the output, to the storage means, and to both the output and storage means.

Preferably, the output includes means (such as a processor and associated memory) for combining data to produce composite data.

Preferably, the combining means is adapted to combine data from any of the following sources: the input; at least one further input; the storage means; and at least one further storage means. In this way, it is possible to use a single output to manage data from multiple sources.

Preferably, in the case of visual data, a mosaic is created using the visual content from each programme; thus, for example, a "picture-in-picture" mosaic may be created. Preferably, in the case of audio data,"voice over" techniques may be used to combine audio data.

Thus, it is possible to route two programmes from each input directly to the output. It is also possible to route a first programme from the input to the output and simultaneously to route a second programme from the storage means to the output. It is also possible to route multiple programmes from the storage means to the output.

Furthermore, as it is possible to route a first programme to the output for live viewing, while time-shifting a second programme, it is possible to view the live programme, while simultaneously viewing the time-shifted programme.

Preferably, the output is adapted for connection to a display means.

The output may include at least two output ports, each connectable to separate display means, and the output may be adapted to transfer data routed to the output from any of the following respective sources to each separate display means: the input; at least one further input; the storage means; and at least one further storage means.

Preferably, the routing means is further adapted to dynamically interconnect the input to the output, to the storage means, and to both the output and the storage means.

Accordingly, the invention extends to a routing apparatus for routing data in a receiver/decoder, comprising means (such as a processor and associated memory) for dynamically interconnecting an input to an output, to storage means (such as a memory store), and to both the output and storage means.

By providing dynamic interconnecting means, the routing apparatus can provide flexibility.

Preferably, the routing apparatus further comprises means (such as a processor and associated memory) for receiving realtime user routing control information, and the interconnecting means comprises routing means (such as a processor and associated memory) adapted to route data from the input to the output, to the storage means, and to both the output and the storage means in accordance with the received realtime user routing control information.

By providing for the dynamic interconnection between the input, the output, and the storage means, in accordance with realtime user routing control information, the routing apparatus can provide a user with increased control over the routing of data in the receiver decoder.

The routing apparatus enables the user to alter the interconnection between the input, the output and the storage means in realtime. Thus, data may at first be routed in accordance with a first possible interconnection between the input, the output, and the storage means, and later the user may provide alternate routing control information, which will cause the routing apparatus to alter the interconnection between the input, the output, and the storage means, and thereby alter the routing of data.

Preferably, the routing apparatus is embodied in software.

According to a further aspect of the invention, there is provided a receiver/decoder incorporating a routing apparatus as described above.

According to yet a further aspect of the invention, there is provided a method of routing data in a receiver/decoder, the method comprising receiving realtime user routing control information, and routing the data from an input to an output, to storage means, and to both the output and storage means in accordance with the received realtime user routing control information.

Preferably, the method may include writing data to the storage means. Also preferably, the method may include retrieving data from the storage means.

Preferably, the method may include routing data from the storage means to the output. In this way, a programme that has been routed to the storage means, and recorded, can later be retrieved from the storage means and routed to the output for viewing.

Preferably, the method may include routing data to a time-shift storage area, to a record storage area, and to both the time-shift and the record storage areas, of the storage means.

Also preferably, the method may include routing data from the time-shift storage area and the record storage area to the output.

Preferably, the method may include receiving user time-shift control instructions.

More preferably, the method may include routing data to the storage means on the basis of the received user time-shift control instructions.

The method may further include routing data to the time-shift storage area of the storage means, on the basis of the received user time-shift control instructions.

Preferably, the user time-shift control instructions comprise at least any of the following instructions: pause; play; rewind and forward. It is also preferably possible to rewind and fast forward at different speeds.

The method may be adapted to route data from at least two inputs, in which case, for each input, the method may include routing data from that input to the output, to the storage means, and to both the output and the storage means.

The method may include routing data from each input independently of data from other inputs.

Preferably, the method may include combining data to produce composite data.

Preferably, the method may include combining data from any of the following sources: the input; at least one further input; the storage means; and at least one further storage means.

The method may include transferring data routed to the output from any of the following respective sources to separate display means: the input; at least one further input; the storage means; and at least one further storage means.

According to another aspect of the invention, there is provided a method of routing data in a receiver/decoder, the method comprising dynamically interconnecting an input to an output, to storage means, and to both the output and storage means.

Preferably the method further comprises selectively routing the data from the input to the output, to the storage means, and to both the output and the storage means.

The method may further comprise receiving realtime user routing control information and connecting the input to the output, to the storage means, and to both the output and the storage means in accordance with the received realtime user routing control information.

According to another aspect of the invention, there is provided a computer program product for routing data in a receiver/decoder, comprising means for receiving realtime user routing control information and means for routing the data from an input to an output, to storage means, and to both the output and the storage means in accordance with the received realtime user routing control information.

Preferably, the computer program product comprises means for writing data to the storage means. Also preferably, the computer program product further comprises means for retrieving data from the storage means.

Preferably, the routing means is adapted to route data from the storage means to the output.

Preferably, the routing means is adapted to route data to a time-shift storage area, to a record storage area, and to both the time-shift and the record storage areas, of the storage means.

Also preferably, the routing means is further adapted to route data from the time-shift storage area and the record storage area to the output.

Preferably, the computer program product further comprises means for receiving user time-shift control instructions.

Preferably, the routing means is adapted to route data to the storage means on the basis of the received user time-shift control instructions.

More preferably, the routing means may be adapted to route data to the time-shift storage area of the storage means, on the basis of the received user time-shift control instructions.

Preferably, the computer program product comprises means in the form of a single user interface for receiving realtime user routing control information and user time-shift control instructions.

Preferably, the computer program product is configured to handle at least one further input, and the routing means is adapted, for each input, to route data from that input to the output, to the storage means, and to both the output and the storage means.

Also preferably, the routing means is adapted to route data from each input independently of data from other inputs.

Preferably, the computer program product includes means for combining data to produce composite data.

Preferably, the combining means is adapted to combine data from any of the following sources: the input; at least one further input; the storage means; and at least one further storage means. In this way, it is possible to use a single output to manage data from multiple sources.

The output may include at least two output ports, each connectable to separate display means, in which case the computer program product may be adapted to transfer data routed to the output from any of the following respective sources to each separate display means: the input; at least one further input; the storage means; and at least one further storage means.

Preferably, the routing means is further adapted to dynamically interconnect the input to the output, to the storage means, and to both the output and the storage means.

Accordingly, the invention extends to a computer program product for routing data in a receiver/decoder, comprising means for dynamically interconnecting an input to an output, to storage means, and to both the output and storage means.

Preferably, the computer program product further comprises means for receiving realtime user routing control information, and the interconnecting means comprises routing means adapted to route data from the input to the output, to the storage means, and to both the output and the storage means in accordance with the received realtime user routing control information.

In a further aspect of the invention, there is provided a command for controlling a data transfer of a bit stream between a source and a destination, the command being adapted to change at least one of the source and the destination of the transfer. In this way, an existing transfer of a bit stream may be changed to meet the requirements of new circumstances, rather than the transfer being reinitiated, thereby avoiding the overheads associated with the initiation of a new transfer process.

The term "data transfer" as used herein preferably connotes a single operation under the control of, for example, a processor. A transfer may, for example, have intermediate stages in which data is routed, possibly asynchronously between a number of components, for example, I/O to a FIFO, a FIFO to a hard disk, and so on.

The source and/or destination may for example be a location in a storage medium, for example a hard disk. The source and/or the destination may be changed to a location in a hard disk, a buffer (for example a FIFO buffer) in memory, or to another device (for example a Firewire port, and so on). Where the source and/or the destination are locations (or fragments) on a hard disk and the source/destination is changed to another such location in the same or another hard disk, the fragment may be larger or smaller than the previous source/destination fragment.

Preferably, the command comprises a reference, for example a handle, to the transfer. A handle in this context is a token or identifier which allows a process or an internal component of a system (for example the file system) to be uniquely identified both by the system and an external agent without explicit reference to the structure and/or the function of the system. The handle may for example be returned by a file system when a transfer process is initiated.

The command is preferably issued during the transfer. In the case where the transfer is composed of intermediate stages, the command may be issued during an intermediate stage, for example, the writing of a portion of a bit stream to the hard disk, or between intermediate stages. For example, the command may be issued some time after a portion of a bit stream being recorded has been stored on a hard disk; the incoming bit stream may, in the meantime, have been stored in a buffer, for example.

Preferably, the command comprises a reference, for example a handle, to a new at least one of the source and destination. In this way, it is not necessary to respecify the initial parameters of the transfer.

Preferably, the command is adapted to extend the transfer. For example, if a data transfer is initially configured to store 10MB of a bit stream in a hard disk, the command may extend the transfer to store 12MB of the bit stream.

This feature is also provided separately. Therefore, in accordance with a further aspect of the invention, there is provided a command for controlling a data transfer of a bit stream between a source and a destination, the command being adapted to extend the transfer.

In accordance with a further aspect of the invention, there is provided a controller comprising means (preferably a processor and associated memory) for generating (or more preparing involving) a command as described above.

Preferably, the controller further comprises means (such as the same or a further processor and associated memory) to initiate a transfer between a source and a destination.

Preferably, the destination is a storage location (for example a fragment on a hard disk or a buffer in memory), and the controller is adapted to issue (or more preferably involve) the command before the storage location is full.

Also preferably, the destination is a storage location (for example a fragment on a hard disk or a buffer in memory), and the controller further comprises means (preferably a processor and associated memory) for generating an event indicating that the storage location is full.

Preferably, the controller is adapted to issue (or more preferably involve) the command in response to generation of the event. In this way, when the transfer takes the form of the storage of a bit stream on a hard disk, a new fragment on the hard disk may be allocated when a current fragment is filled.

In accordance with a further aspect of the invention, there is provided a receiver/decoder comprising a storage medium and a controller as described above.

In accordance with a further aspect of the invention, there is provided a file system comprising means (for example a processor and associated memory) for controlling a transfer of data between a source and a destination by changing at least one of the source and the destination.

Preferably, the controller further comprises means (for example the processor and associated memory) for initiating a transfer of data between a source and a destination, at least one of the source and the destination being a location in a storage medium.

In accordance with a further aspect of the invention, there is provided a file system comprising means (for example a processor and associated memory) for extending a transfer of data between a source and a destination.

Preferably, the controller further comprises means (for example the processor and associated memory) for initiating a transfer of data between a source and a destination, at least one of the source and the destination being a location in a storage medium.

Such file systems may be file systems in a receiver/decoder, for example and may comprise the file system library and the file allocation table.

It is an aim of one form of the invention to facilitate the storage of audiovisual bit streams or the like when one or more characteristic of the bit stream (for example duration, bit rate) remain unknown at the time the storage process is initiated. Typically, a viewer will wish to store a programme within a digital television transport stream, without the actual bit count of that bit stream being known in advance. Moreover, a viewer may elect to terminate a storage procedure before it is complete and/or initiate a second storage procedure.

Accordingly, in a further aspect of the invention there is provided a method of storing a section of an incoming bit stream in a receiver/decoder comprising a process controller and a storage device, comprising the steps of assigning a respective memory location of size much less than the actual or an anticipated bit count of the defined bit stream section and storing a corresponding portion of the incoming bit stream at said location, the steps being repeated until the storage of the bit stream is terminated, thereby to limit the extent of memory assigned during the storage of the bit stream but not employed for storage.

Such a method has the advantage that it is not necessary to know the total size of the bit stream or to estimate its total size before commencing storage. Furthermore, a relatively small amount of storage capacity may be allocated for the storage of the bit stream leaving the rest of the storage capacity available, for example, for the storage of other bit streams.

Preferably, storage of the bit stream is initiated by the process controller which issues a command to store a first portion of the bit stream at a specified location on the storage device, the command specifying the size of the first portion to be stored.

In this way, a portion of the bit stream may be stored without knowing the bit rate or the aggregate bit rate of the bit stream.

Preferably, the storage device notifies the process controller when storage of a portion of the bit stream has been effected. Still more preferably, the process controller responds to the notification by issuing a command to store a subsequent portion of the bit stream at a further location on the storage device, and wherein the process controller specifies the size of the subsequent portion. In this way, the bit stream is stored piecewise, without at any time requiring knowledge of the total size of the bit stream, its bit rate or average bit rate and, on the other hand, without allocating in advance large portions of storage capacity to the storage of the bit stream.

Preferably, the command to store a first portion of the bit stream and/or the command to store a subsequent portion of the bit stream specifies a plurality of locations on the storage device. Such a method may store portions of the incoming bit stream in a fragmented manner within the storage device.

Preferably, the method may also read a stored bit stream, under viewer control, the viewer interface permitting the viewer to initiate or terminate playback of a programme or other defined section of a bit stream from a storage device, comprising a reading procedure serving under the direction of the viewer interface to read the bit stream, the procedure comprising the steps of reading a portion of the bit stream from a respective memory location of size much less than the actual or an anticipated bit count of the defined bit stream section, this step being repeated until the playback procedure is terminated.

In accordance with a further aspect of the invention, there is provided a method of reading a programme or other defined section of a stored bit stream in a receiver/decoder comprising a process controller and a storage device, the method comprising the steps of reading a portion of the bit stream from a respective memory location of size much less than the actual or an anticipated bit count of the defined bit stream section, this step being repeated until the reading of the bit stream is terminated. In this way, it is not necessary to know in advance the size of the bit stream to be read.

Preferably, the process controller initiates the playback of the bit stream by issuing a command to read a first portion of the bit stream from a specified location on the storage device, and wherein the process controller specifies the size of the first portion to be read.

Preferably, the storage device notifies the process controller when the reading of a portion of the bit stream has been effected.

Preferably, the process controller responds to the notification by issuing a command to read a subsequent portion of the bit stream from a further location on the storage device, and wherein the process controller specifies the size of the subsequent portion.

Preferably, the command to read a first portion of the bit stream and/or the command to read a subsequent portion of the bit stream specifies a plurality of locations on the storage device.

Preferably, the storage device comprises a hard disk, although other devices, such as Firewire ports, DVD recorders, other mass storage devices or combinations of devices, may also be used.

Preferably, after an initial step storage and/or reading of the bit stream is performed under the control of devices in a device layer of a software architecture.

Preferably, the sizes of the portions of the bit stream to be stored or read vary. Still more preferably, the sizes of portions of the bit stream to be recorded vary with reference to the amount of data already stored on the storage device available and/or the arrangement of such data on the storage device. This is particularly advantageous when the storage device is fragmented and/or is approaching capacity, especially when more than one programme is being recorded simultaneously.

In accordance with a further aspect of the invention, there is provided a computer program product adapted to perform a method as aforesaid.

In accordance with a further aspect of the invention, there is provided a receiver/decoder comprising a process controller, a storage device, a viewer interface which permits the viewer to initiate or terminate storage of a programme or other defined section of a bit stream on a storage device, the receiver/decoder being adapted to store the bit stream in appropriate memory locations within the storage device by assigning a respective memory location of size much less than the actual or an anticipated bit count of the defined bit stream section and storing a corresponding portion of the incoming bit stream at said location, the steps being repeated until the storage of the bit stream is terminated, thereby to limit the extent of memory assigned during the storage of the bit stream but not employed for storage.

Preferably, the process controller is adapted to issue a command to store a first portion of the bit stream at a specified location on the storage device, the command specifying the size of the first portion to be stored.

Preferably, the storage device is adapted to notify the process controller when storage of a portion of the bit stream has been effected.

Preferably, the process controller is adapted to respond to the notification by issuing a command to store a subsequent portion of the bit stream at a further location on the storage device, and wherein the process controller specifies the size of the subsequent portion.

Preferably, the command to store a first portion of the bit stream and/or the command to store a subsequent portion of the bit stream specifies a plurality of locations on the storage device.

Preferably, the viewer interface also permits the viewer to initiate or terminate the playback of a programme or other defined section of a bit stream from a storage device, the receiver/decoder being adapted to read a portion of the bit stream from a respective memory location of size much less than the actual or an anticipated bit count of the defined bit stream section, this step being repeated until the playback is terminated.

In accordance with a further aspect of the invention, there is provided a receiver/decoder comprising a process controller, a storage device, a viewer interface which permits the viewer to initiate or terminate playback of a programme or other defined section of a bit stream on a storage device, the receiver/decoder being adapted to read a portion of the bit stream from a respective memory location of size much less than the actual or an anticipated bit count of the defined bit stream section, this step being repeated until the playback is terminated.

Preferably, the process controller is adapted to issue a command to read a first portion of the bit stream from a specified location on the storage device, and wherein the process controller specifies the size of the first portion to be read.

Preferably, the storage device is adapted to notify the process controller when the reading of a portion of the bit stream has been effected.

Preferably, the process controller is adapted to respond to the notification by issuing a command to read a subsequent portion of the bit stream from a further location on the storage device, and wherein the process controller specifies the size of the subsequent portion.

Preferably, the command to read a first portion of the bit stream and/or the command to read a subsequent portion of the bit stream specifies a plurality of locations on the storage device.

Preferably, the storage device comprises a hard disk.

Preferably, the receiver/decoder is adapted such that after an initial step storage and/or reading of the bit stream is performed under the control of devices in a device layer of a software architecture.

Preferably, the sizes of the portions of the bit stream to be stored or read vary.

Preferably, the sizes of portions of the bit stream to be recorded vary with reference to the amount of data already stored on the storage device available and/or the arrangement of such data on the storage device.

In accordance with a further aspect of the invention there is provided a system for providing local storage of an incoming bit stream, under viewer control, comprising a viewer interface which permits the viewer to initiate or terminate storage of a programme or other defined section of a bit stream on a storage device, and a storage procedure serving under the direction of the viewer interface to store the bit stream in appropriate memory locations within the storage device, the procedure comprising the steps of assigning a respective memory location of size much less than the actual or an anticipated bit count of the defined bit stream section and storing a corresponding portion of the incoming bit stream at said location, the steps being repeated until the storage procedure is terminated, thereby to limit the extent of memory assigned during the storage procedure but not employed for storage.

Preferably, the storage of the bit stream is initiated by a process controller which issues a command to store a first portion of the bit stream at a specified location on the storage device, the command specifying the size of the first portion to be stored.

Preferably, the storage device notifies the process controller when storage of a portion of the bit stream has been effected. Still more preferably, the process controller responds to the notification by issuing a command to store a subsequent portion of the bit stream at a further location on the storage device, and wherein the process controller specifies the size of the subsequent portion.

Preferably, the system may also be adapted to read a stored bit stream, under viewer control, the viewer interface permitting the viewer to initiate or terminate playback of a programme or other defined section of a bit stream from a storage device, comprising a reading procedure serving under the direction of the viewer interface to read the bit stream, the procedure comprising the steps of reading a portion of the bit stream from a respective memory location of size much less than the actual or an anticipated bit count of the defined bit stream section, this step being repeated until the playback procedure is terminated.

In a further aspect of the invention, there is provided a system for reading a stored bit stream, under viewer control, comprising a viewer interface which permits the viewer to initiate or terminate playback of a programme or other defined section of a bit stream from a storage device, and a reading procedure serving under the direction of the viewer interface to read the bit stream, the procedure comprising the steps of reading a portion of the bit stream from a respective memory location of size much less than the actual or an anticipated bit count of the defined bit stream section, this step being repeated until the playback procedure is terminated.

Preferably, a process controller initiates the reading of the bit stream by issuing a command to read a first portion of the bit stream from a specified location on the storage device, and wherein the process controller specifies the size of the first portion to be read.

Preferably, the storage device notifies the process controller when the reading of a portion of the bit stream has been effected. In this way, the bit stream is read piecewise without knowing the total size of the bit stream to be read or the average bit rate of the bit stream. Still more preferably, the process controller responds to the notification by issuing a command to read a subsequent portion of the bit stream from a further location on the storage device, and wherein the process controller specifies the size of the subsequent portion. In this way, the bit stream is read piecewise and it is not necessary to know in advance the duration/size of the bit stream or its bit rate.

The storage device may preferably comprise a hard disk.

Preferably, after an initial step storage and/or reading of the bit stream is performed under the control of devices in a device layer of a software architecture.

Preferably, the sizes of the portions of the bit stream to be stored or read vary. Still more preferably, the sizes of portions of the bit stream to be recorded vary with reference to the amount of data already stored on the storage device available and/or the arrangement of such data on the storage device.

In a further aspect of the invention, there is provided a computer program product comprising a command or a controller as aforesaid.

The invention also provides a receiver/decoder comprising a file system as aforesaid, and a broadcast system comprising a receiver/decoder as aforesaid.

In accordance with a further aspect of the invention, there is provided a computer program product comprising means for controlling a data transfer of a bit stream between a source and a destination, the command being adapted to change at least one of the source and destination of the transfer.

Preferably, at least one of the source and the destination is a location in a storage medium.

Preferably, the means for controlling a data transfer is adapted to extend the transfer.

In a further aspect of the invention, there is provided a computer program product comprising means for controlling a data transfer of a bit stream between a source and a destination, the command being adapted to extend the transfer.

Preferably, in either of the above aspects, the means for controlling a data transfer comprises a reference to the transfer.

Preferably, the means for controlling a transfer comprises a reference to a new at least one of the source and destination.

In a further aspect of the invention, there is provided a computer program product comprising a controlling means for involving a command as aforesaid.

In a yet further aspect of the invention, there is provided a computer program product comprising a file system controlling means (for example a processor and associated memory), in turn comprising means for controlling a transfer of data between a source and a destination by changing at least one of the source and the destination of the transfer.

Preferably, the file system controlling means further comprises means for initiating a transfer of data between a source and a destination.

Preferably, the file system controlling means further comprises means for extending a transfer of data between a source and a destination, at least one of the source and the destination being location in a storage medium.

Preferably, the file system controlling means further comprises means for initiating a transfer of data between a source and a destination.

It is known from the MPEG-2 standards to provide receiver/decoders which synchronise presentation of components of audiovisual data using program clock references (described below). However, such receiver/decoders suffer from a lack of flexibility.

It is an aim of the invention to provide improvements in the field of digital television and to overcome or alleviate the lack of flexibility of known receiver/decoders.

Accordingly, in a further aspect of the invention, there is provided apparatus for receiving and processing data comprising means for receiving the data and means for synchronising the data in two or more different modes. Both the means for receiving the data and the means for synchronising the data may be for example a processor and associated memory.

The modes may be one of "push" and "pull" modes generally, or different types of "push" and "pull" modes, for example. The term "push mode" as used herein preferably connotes a mode in which the processor of the data (such as a receiver/decoder) does not control the synchronisation of the data (such as with the reception of a live broadcast, for example). By contrast, the term "pull mode" as used herein preferably connotes a mode in which the processor of the data synchronises the data (during playback from a local storage medium under the control of the processor of the data, for example).

Such an apparatus may confer the advantage of providing increased flexibility in the synchronisation of data.

In order to provide seamless processing of a service, the apparatus may comprise means for switching between synchronisation modes during processing of a service.

This can allow a transition from "push" to "pull" mode, and *vice versa*, for example. In particular, the means for switching may be adapted to be switchable between synchronisation modes in response to user input. This can allow the user to take more control in the processing of the service.

Furthermore, the means for switching may be adapted to be switchable between synchronisation modes in response to an error signal, which can isolate the viewer from the source of such an error signal. For example, if an error occurs during one type of "pull" mode synchronisation, the apparatus can then switch to a less error-prone (at that time at least) type of "pull" mode synchronisation.

In order to facilitate the synchronisation of the data, the apparatus may comprise a clock and means for regulating the clock. The apparatus may additionally comprise means for receiving clock regulation signals, and it may be adapted in a first synchronisation mode to regulate the clock in dependence upon the clock regulation signals. In this case, the apparatus may be further adapted in the first synchronisation mode to process the data in dependence upon the regulated clock.

Additionally or alternatively, when the data comprises a plurality of components (such as video and audio components, described below), the apparatus may comprise means for receiving time stamp information in relation to a first component of the data, and be adapted in a second synchronisation mode to regulate the clock in dependence upon the time stamp information. In this case, the apparatus may be further adapted in the second synchronisation mode to regulate at least one other component of the data in dependence upon the regulated clock.

The data is preferably audio/visual data, perhaps in the form of multiplexed packetised elementary streams (for example an MPEG-2 transport stream). In the case of an MPEG-2 transport stream, the clock regulation information may be PCRs (program clock references, described further below). Alternatively, the data may be an MPEG-2 program stream, in which case the time stamp information may be PTSs (presentation time stamps, described further below) taken from an elementary stream (for example an audio or, preferably, a video stream) of the program stream.

The apparatus is preferably adapted to receive digital television data (preferably from a digital television broadcasting centre). However, it may additionally or alternatively be adapted to receive data from a local storage device.

In further aspect of the invention, there is provided a receiver/decoder comprising the apparatus as aforesaid, and preferably also a storage device, such as a hard disk.

It is known (for example from our earlier International Patent Application No. WO99/51021) to provide a service device which sets up the main video sequence and which controls its display. This known service device suffers from the disadvantage that it lacks flexibility in the control of the display of the video sequence in a number of areas.

In accordance with a further aspect of the invention, there is therefore provided a video device (preferably embodied in software) adapted to regulate the speed of presentation of a video sequence being displayed, preferably using speed regulating means (for example a command invocable by another entity in a software architecture of a receiver/decoder) for causing the video device to change the speed of the video sequence.

The video device may be adapted to regulate types of frames of a video sequence to be displayed, thereby regulating the speed of presentation of the video sequence. Such a device may provide a means for determining which frames of a video sequence may be dropped, for example when displaying a video sequence at high speed, in order to effect the least detriment in the quality of the video display.

The video device preferably comprises video mode setting means for specifying the types of frames of a video sequence to be displayed (for example, a command invocable by another item in a software architecture of a receiver/decoder).

The video device may further be further adapted to display and hold a single frame. This can provide a "freeze frame" functionality; preferably the video device is further adapted to display on command either or both of independent frames (such as 'key' frames) and dependent frames (such as interpolated or differential frames), and/or the single frames mentioned above. This can improve the versatility of the video device.

In accordance with a yet further aspect of the invention, there is provided a service device (preferably embodied in software) comprising means for receiving a command, and means for issuing a command to a plurality of other devices.

The service device is preferably adapted to regulate the processing of data and may be operable in more than one function mode. Such a service device may confer flexibility on the processing of the data. In the case of a service device in a receiver/decoder, the data is preferably audio/visual data.

The service device may preferably be operable in at least one of a stop function mode in which the data is not processed, a play function mode in which the data is processed and a pause function mode in which processing of the data is suspended.

The means for receiving a command is preferably adapted to receive the command from an application and the means for issuing a command is preferably adapted to issue the command to an item of hardware.

In a further aspect of the invention, there is provided a method of receiving data (preferably at a receiver/decoder), and synchronising the data in two or more different modes.

The method preferably comprises switching between synchronisation modes during processing of a service. The step of switching may comprise switching between synchronisation modes in response to user input. Furthermore, the step of switching may comprise switching between synchronisation modes in response to an error signal.

The method may comprise reading a clock, and regulating the clock. The method may additionally comprise receiving clock regulation signals, and it may comprise in a first synchronisation mode means for regulating the clock in dependence upon the clock regulation signals. In this case, the computer program product may further comprise in the first synchronisation mode processing the data in dependence upon the regulated clock.

Additionally or alternatively, the method may comprise receiving time stamp information in relation to a first component of the data, and may comprise in a second synchronisation mode regulating the clock in dependence upon the time stamp information. In this case, in the second synchronisation the method may further comprise mode regulating at least one other component of the data in dependence upon the regulated clock.

As before, the data is preferably audio/visual data, perhaps in the form of multiplexed packetised elementary streams. The data may be an MPEG-2 program stream, in which case the time stamp information may preferably be PTSs (presentation time stamps, described further below) taken from an elementary stream (for example an audio or, preferably, a video stream) of the program stream.

The method preferably comprises receiving digital television data. However, it may additionally or alternatively comprise receiving data from a local storage device.

In accordance with a further aspect of the invention, there is provided a method of regulating the speed of presentation of a video sequence being displayed, preferably further comprising providing an interface for changing the speed of the video sequence.

The method may comprise regulating types of frames of a video sequence to be displayed. The method preferably comprises providing an interface for specifying the types of frames of a video sequence to be displayed.

The method may further comprise displaying and holding a single frame.

In accordance with a yet further aspect of the invention, there is provided a method of receiving a command, and issuing a command to a plurality of other devices.

The method preferably comprises regulating the processing of data, and may comprise operating in more than one function mode. The data is preferably audio/visual data. The method preferably comprises operating in at least one of a stop function mode in which the data is not processed, a play function mode in which the data is processed and a pause function mode in which processing of the data is suspended. The method preferably further comprises receiving the command from an application and issuing the command to an item of hardware.

In another aspect of the invention, there is provided a computer program product (preferably for use with a receiver/decoder) adapted to perform a method as aforesaid.

In a yet further aspect of the invention, there is provided a computer program product (preferably for use with a receiver/decoder) comprising apparatus, a video device or a service device as aforesaid.

In a further aspect of the invention, there is provided a computer program product (preferably for use with a receiver/decoder) comprising means for receiving data and means for synchronising the data in two or more different modes.

The computer program product preferably comprises means for switching between synchronisation modes during processing of a service. The means for switching may be adapted to be switchable between synchronisation modes in response to user input. Furthermore, the means for switching may be adapted to be switchable between synchronisation modes in response to an error signal.

The computer program product may comprise means for reading a clock, and means for regulating the clock. The computer program product may additionally comprise means for receiving clock regulation signals, and it may comprise in a first synchronisation mode means for regulating the clock in dependence upon the clock regulation signals. In this case, the computer program product may further comprise in the first synchronisation mode means for processing the data in dependence upon the regulated clock.

Additionally or alternatively, the computer program product may comprise means for receiving time stamp information in relation to a first component of the data, and may comprise in a second synchronisation mode means for regulating the clock in dependence upon the time stamp information. In this case, the computer program product may be further adapted in the second synchronisation mode to regulate at least one other component of the data in dependence upon the regulated clock.

As before, the data is preferably audio/visual data, perhaps in the form of multiplexed packetised elementary streams. The data may be an MPEG-2 program stream, in which case the time stamp information may preferably be PTSs (presentation time stamps, described further below) taken from an elementary stream (for example an audio or, preferably, a video stream) of the program stream.

The computer program product preferably comprises means for receiving digital television data. However, it may additionally or alternatively be adapted to receive data from a local storage device.

In accordance with a further aspect of the invention, there is provided a computer program product adapted to regulate the speed of presentation of a video sequence being displayed, preferably using speed regulating means for causing the computer program product to change the speed of the video sequence.

The computer program product may be adapted to regulate types of frames of a video sequence to be displayed. The computer program product preferably comprises video mode setting means for specifying the types of frames of a video sequence to be displayed. The computer program product may further be adapted to display and hold a single frame.

In accordance with a yet further aspect of the invention, there is provided a computer program product comprising means for receiving a command and means for issuing a command to a plurality of other devices.

The computer program product is preferably adapted to regulate the processing of data and may be operable in more than one function mode. The data is preferably audio/visual data. The computer program product is preferably operable in at least one of a stop function mode in which the data is not processed, a play function mode in which the data is processed and a pause function mode in which processing of the data is suspended.

The means for receiving a command is preferably adapted to receive the command from an application and the means for issuing a command is preferably adapted to issue the command to an item of hardware.

In a yet further aspect of the invention, there is provided a computer readable medium comprising a computer program product as aforesaid.

In another aspect of the invention, there is provided a signal tangibly embodying a computer program product as aforesaid.

In a yet further aspect of the invention, there is provided a receiver/decoder comprising any of apparatus, a video device, a service device, a computer program product, a computer readable medium, or a signal as aforesaid.

In another aspect of the invention, there is provided a broadcast system comprising a broadcast centre and a receiver/decoder as aforesaid.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:-
Figure 1 is an overview of a satellite digital television system;
Figure 2 is an overview of a cable digital television system;
Figure 3 is an overall system view, with the head-end shown in more detail;
Figure 4 is a schematic of the component architecture of the receiver/decoder;
Figure 5 is a diagram of the software architecture of the receiver/decoder;
Figure 6 is a diagram showing the top half of Figure 5 in more detail;
Figure 7 is a diagram showing the bottom half of Figure 5 in more detail;
Figure 8 is a diagram showing an alternative embodiment of the bottom half of Figure 5;
Figure 9 is a schematic of the interconnections between various components of the receiver/decoder used for routing;
Figure 10 is a schematic diagram of a remote control;
Figure 11 is a flow diagram illustrating the operation of a routing apparatus;
Figure 12 is a schematic of an example of a possible routing configuration of the receiver/decoder;
Figure 13 is schematic of another example of a possible routing configuration of the receiver/decoder;
Figure 14 is a schematic of a further example of a possible routing configuration of the receiver/decoder;
Figure 15 is a block diagram of the components of the receiver/decoder involved in the mass storage and retrieval of bit streams;
Figure 16 contains schematic representations of the source and/or destination of a transfer being changed;
Figure 17 is an overview of a storage procedure;
Figure 18 is a schematic representation of a bit stream being stored;
Figure 19 is an overview of a playback procedure;
Figure 20 is a schematic representation of a bit stream being read;
Figure 21 illustrates the function modes of a service device, and the transitions between the modes;
Figure 22 illustrates three modes of synchronising a service; and
Figure 23 is a representation of a video device and a service device and their interrelationship with other components of a receiver/decoder.

### System overview

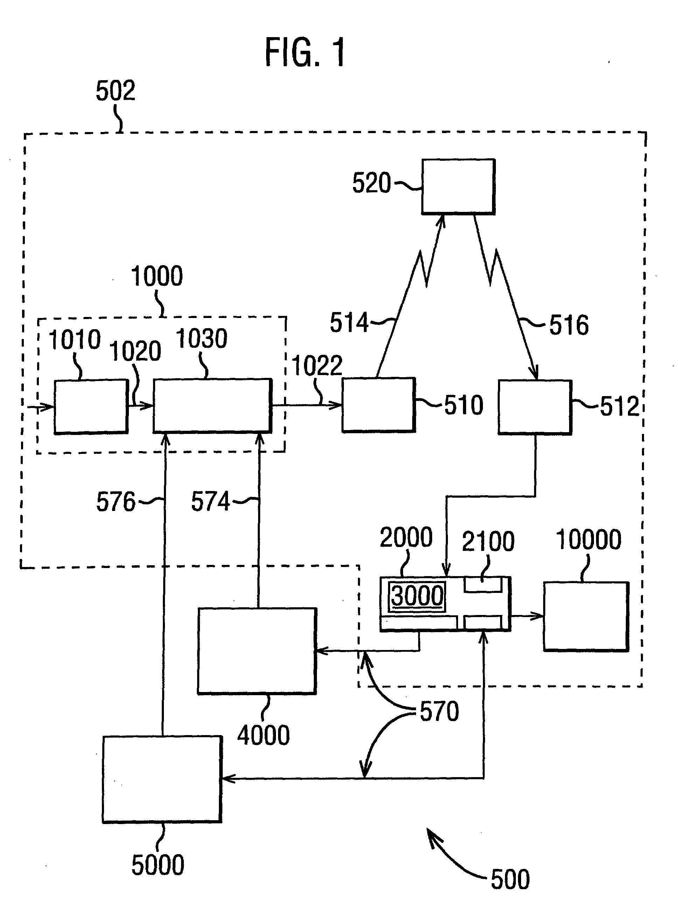

An overview of a digital television system 500 is shown in Figure 1. As will be discussed below, the system 500 comprises a broadcast centre 1000, a receiver/decoder 2000, a software/hardware architecture 3000 of the receiver/decoder, an interactive system 4000, and a conditional access system 5000, as will all be discussed below.

The system 500 includes a mostly conventional digital television system 502 that uses the known MPEG-2 compression system to transmit compressed digital signals. In more detail, MPEG-2 compressor 1010 in a broadcast centre 1000 receives a digital signal stream (typically a stream of video signals). The compressor 1010 is connected by linkage 1020 to a multiplexer and scrambler 1030.

The multiplexer 1030 receives aplurality of further input signals, assembles the transport stream and transmits compressed digital signals to a transmitter 510 of the broadcast centre via linkage 1022, which can of course take a wide variety of forms including telecommunications links. The transmitter 510 transmits electromagnetic signals via uplink 514 towards a satellite transponder 520, where they are electronically processed and broadcast via notional downlink 516 to earth receiver 512, conventionally in the form of a dish owned or rented by the end user. Other transport channels for transmission of the data are of course possible, such as terrestrial broadcast, cable transmission, combined satellite/cable links, telephone networks etc.

The signals received by receiver 512 are transmitted to an integrated receiver/decoder 2000 owned or rented by the end user and connected to the end user's television set 10000. The receiver/decoder 2000 decodes the compressed MPEG-2 signal into a television signal for the television set 10000. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In the receiver/decoder 2000 a hard disk 2100 is provided, on which audio/visual and other data can be stored. This allows advanced recording and playback facilities for programmes received by the receiver/decoder, and also allows large amounts of other types of data, such as electronic programme guide data, to be stored in the receiver/decoder.

A content management and protection system (CMPS) 2300 (not shown) in the receiver/decoder provides the ability securely and flexibly to control the recording and playback of data on the hard disk 2100 (or other storage device).

In a multichannel system, the multiplexer 1030 handles audio and video information received from a number of parallel sources and interacts with the transmitter 510 to broadcast the information along a corresponding number of channels. In addition to audiovisual information, messages or applications or any other sort of digital data may be introduced in some or all of these channels interlaced with the transmitted digital audio and video information.

An interactive system 4000 is connected to the multiplexer 1030 and the receiver/decoder 2000, and is located partly in the broadcast centre and partly in the receiver/decoder. It enables the end user to interact with various applications via a back channel 570. The back channel may be, for example a Public Switched Telephone Network (PSTN) channel (for example, a modemmed back channel) or an Out of Band (OOB) channel.

A conditional access system 5000, also connected to the multiplexer 1030 and the receiver/decoder 2000 and again located partly in the broadcast centre and partly in the receiver/decoder, enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2000. Using the receiver/decoder 2000 and smartcard, the end user may purchase commercial offers in either a subscription mode or a pay-per-view mode. Typically this is achieved using the back channel 570 which is used by the interactive system 4000.

As mentioned above, programmes transmitted by the system are scrambled at the multiplexer 1030, the conditions and encryption keys applied to a given transmission being determined by the access control system 5000. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 2000 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

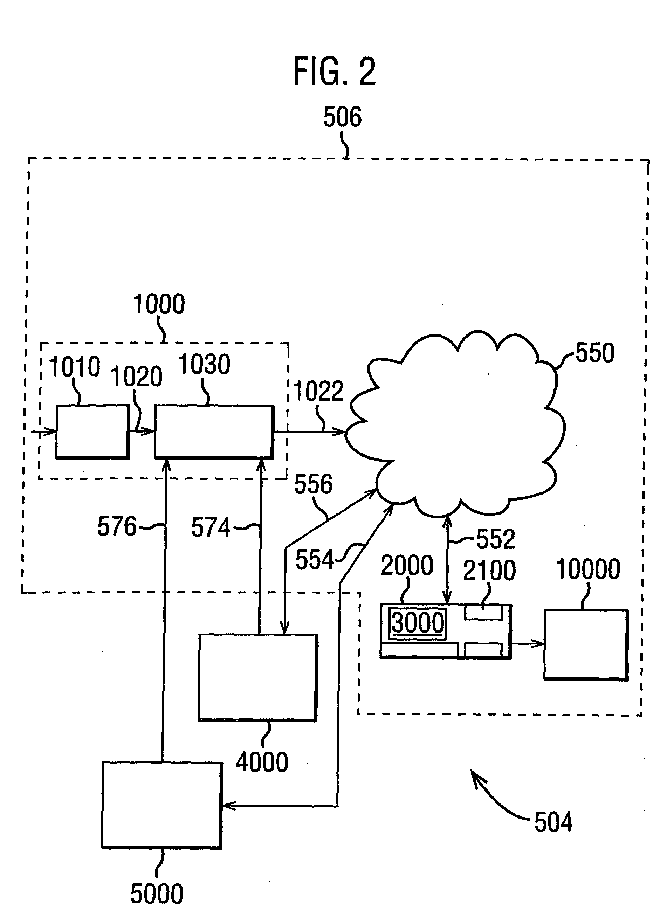

Figure 2 illustrates an alternative embodiment of a digital television system 504, utilising a cable network as the broadcast medium for the compressed digital signals. In this figure, like parts are indicated with like numerals.

The satellite transponder and transmitting and receiving stations are replaced by a cable network 550. Additionally, in this particular embodiment, the modemmed back channel between the receiver/decoder 2000 and the interactive system 4000 and conditional access system 5000 is removed, replaced by linkages 554, 556 between the cable network 550 and the conditional access system 5000 and interactive system 4000 respectively. The receiver/decoder 2000 thus communicates with the other systems via the cable network 550, utilising a cable modem or other means to allow it to send and receive data via the same link as it receives data from the broadcast centre.

The cable network 550 may be any form of wide area network (WAN), such as a dedicated connection, the internet, local cable distribution network, wireless connection, or any combination of the above. In the present embodiment, the hybrid fibre coax (HFC) network is used. It is appreciated that the various means of communication between the receiver/decoder 2000 and the other components of the television system are interchangeable.

### Conditional access system

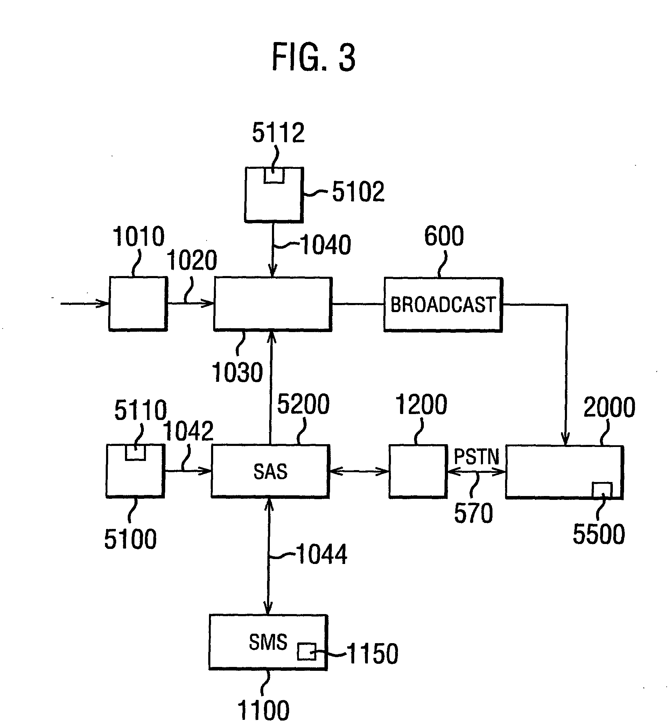

With reference to Figure 3, in overview the conditional access system 5000 includes a Subscriber Authorization System (SAS) 5200. The SAS 5200 is connected to one or more Subscriber Management Systems (SMS) 1100, one SMS for each broadcast supplier, by a link 1044, which may be a TCP-IP link or other type of link. Alternatively, one SMS could be shared between two commercial operators, or one operator could use two SMSs, and so on.

First encrypting units in the form of ciphering units 5100 utilising "mother" smartcards 5110 are connected to the SAS by linkage 1042. Second encrypting units again in the form of ciphering units 5102 utilising mother smartcards 5112 are connected to the multiplexer 1030 by linkage 1040. The receiver/decoder 2000 receives a "daughter" smartcard 5500. The receiver/decoder is connected directly to the SAS 5200 via communications servers 1200 and the modemmed back channel 570. The SAS sends amongst other things subscription rights to the daughter smartcard on request.

In variants of the preferred embodiment, internet or cable connections either complement or replace the PSTN 570 and communications servers 1200.

The smartcards contain confidential information from one or more commercial operators. The "mother" smartcard encrypts different kinds of messages and the "daughter" smartcards decrypt the messages, if they have the rights to do so.

With reference to Figure 3, in the broadcast centre, the digital video signal is first compressed (or bit rate reduced), using the MPEG-2 compressor 1010. This compressed signal is then transmitted to the multiplexer and scrambler 1030 in order to be multiplexed with other data, such as other compressed data.

The scrambler generates a control word used in the scrambling process and included in the MPEG-2 stream in the multiplexer 1030. The control word is generated internally and enables the end user's integrated receiver/decoder 2000 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 5102 via the linkage 1040. In this unit, an ECM is generated, encrypted and transmitted on to the multiplexer and scrambler 1030.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 1030 receives electrical signals comprising encrypted EMMs from the SAS 5200, encrypted ECMs from the second encrypting unit 5102 and compressed programmes from the compressor 1010. The multiplexer 1030 scrambles the programmes and transmits the scrambled programmes, the encrypted EMMs and the encrypted ECMs as electric signals to broadcast system 600, which may be for example a satellite system as shown in Figure 1, or other broadcast system. The receiver/decoder 2000 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 2000 extracts the corresponding ECM from the MPEG-2 stream and passes the ECM to the "daughter" smartcard 5500 of the end user. This slots into a housing in the receiver/decoder 2000. The daughter smartcard 5500 controls whether the end user has the right to decrypt the ECM and to access the programme. If not, a negative status is passed to the receiver/decoder 2000 to indicate that the programme cannot be descrambled. If the end user does have the rights, the ECM is decrypted and the control word extracted. The decoder 2000 can then descramble the programme using this control word. The MPEG-2 stream is decompressed and translated into a video signal for onward transmission to television set 10000.

If the programme is not scrambled, no ECM will have been transmitted with the MPEG-2 stream and the receiver/decoder 2000 decompresses the data and transforms the signal into a video signal for transmission to television set 10000.

The subscriber management system (SMS) 1100 includes a database 1150 which manages, amongst others, all of the end user files, commercial offers (such as tariffs and promotions), subscriptions, PPV details, and data regarding end user consumption and authorization. The SMS may be physically remote from the SAS.

The SMS 1100 transmits messages to the SAS 5200 which imply modifications to or creations of Entitlement Management Messages (EMMs) to be transmitted to end users. The SMS 1100 also transmits messages to the SAS 5200 which imply no modifications or creations of EMMs but imply only a change in an end user's state (relating to the authorization granted to the end user when ordering products or to the amount that the end user will be charged). The SAS 5200 also sends messages (typically requesting information such as call-back information or billing information) to the SMS 1100, so that it will be apparent that communication between the two is two-way.

### Receiver/decoder

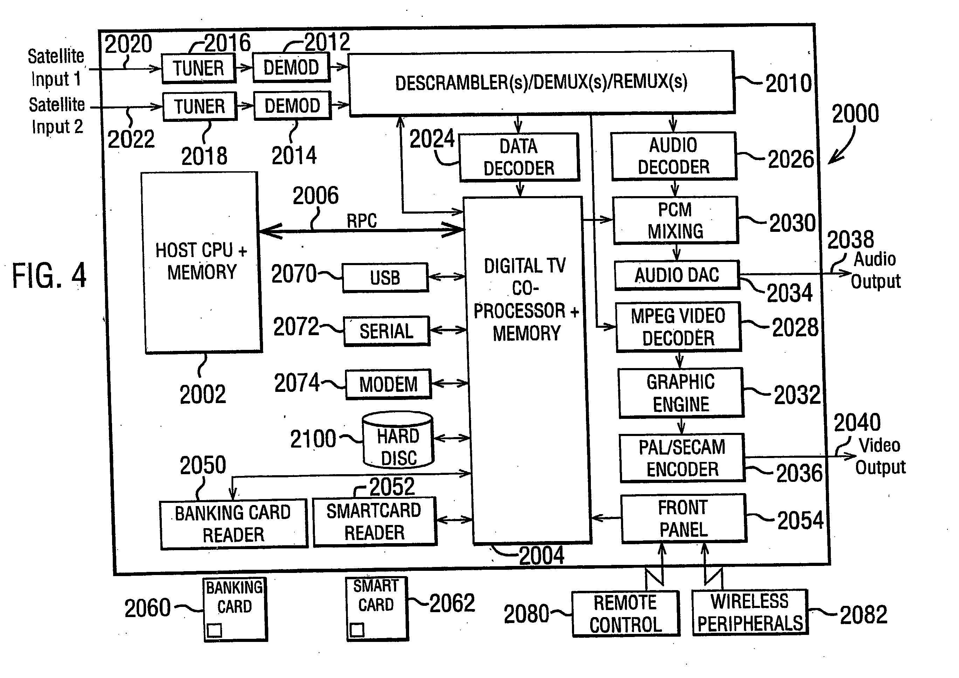

Referring to Figure 4, the various elements of receiver/decoder 2000 will now be described in terms of functional blocks.

The receiver/decoder 2000, which may be, for example, a digital set-top box (DSTB), comprises a central host processor 2002 and a digital TV coprocessor 2004, both having associated memory elements (not shown) and joined by a coprocessor bus 2006. The coprocessor 2004 is adapted to receive input data from a USB interface 2070, a serial interface 2072, a parallel interface (not shown), a modem 2074 (connected to the modem back channel 570 of Fig. 1), and switch contacts on the front panel 2054 of the decoder.

The receiver/decoder is additionally adapted to receive inputs from an infra-red remote control 2080 (and optionally from other wireless peripherals 2082 such as Bluetooth-enabled devices) and also possesses two smartcard readers 2050, 2052 adapted to read bank and subscription smartcards 2060, 2062 respectively. The subscription smartcard reader 2052 engages with an inserted subscription card 2062 and with a conditional access unit (not shown) to supply the necessary control word to a demultiplexer/descrambler/remultiplexer unit 2010 to enable the encrypted broadcast signal to be descrambled. The decoder also includes a conventional tuner 2016 and demodulator 2012 to receive and demodulate the satellite transmission before being filtered and demultiplexed by the demodulator/descrambler unit 2010. A second tuner 2018 and second demodulator 2014 are also provided, to allow, amongst other things, a second channel to be received and decoded in parallel with the first.

A hard disk 2100 is also provided, allowing storage of programme and application data received and generated by the receiver/decoder. In conjunction with the two tuners 2016, 2018, two demodulators 2012, 2014, the descrambler/demultiplexer/remultiplexer 2010, and the data decoder 2024 and audio decoder 2026, advanced recording and playback features are provided, allowing simultaneous recordings of one or more programmes while a further programme is being viewed, and more general transfers to and from the hard disk to and from the display devices and/or inputs and outputs, all occurring in parallel.

The audio output 2038 and video output 2040 in the receiver/decoder are fed by the PCM mixer 2030 and audio DAC 2034, and the MPEG video decoder 2028, graphic engine 2032 and PAL/SECAM encoder 2036 respectively. Alternative or complementary outputs may of course be provided.

As used in this description, an application is preferably a piece of computer code for controlling high level functions of preferably the receiver/decoder 2000. For example, when the end user positions the focus of remote control 2080 on a button object seen on the screen of the television set (not shown) and presses a validation key, the instruction sequence associated with the button is run. Applications and the associated middleware are executed by the host processor 2002, with remote procedure calls (RPCs) being made to the digital TV coprocessor 2004 across the coprocessor bus 2006 as and when required.

An interactive application proposes menus and executes commands at the request of the end user and provides data related to the purpose of the application. Applications may be either resident applications, that is, stored in the ROM (or FLASH or other non-volatile memory) of the receiver/decoder 2000, or broadcast and downloaded into the RAM, FLASH memory or hard disk of the receiver/decoder 2000.

Applications are stored in memory locations in the receiver/decoder 2000 and represented as resource files. The resource files comprise graphic object description unit files, variables block unit files, instruction sequence files, application files and data files.

The receiver/decoder contains memory (not shown) divided into at least one RAM volume, a FLASH volume and at least one ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

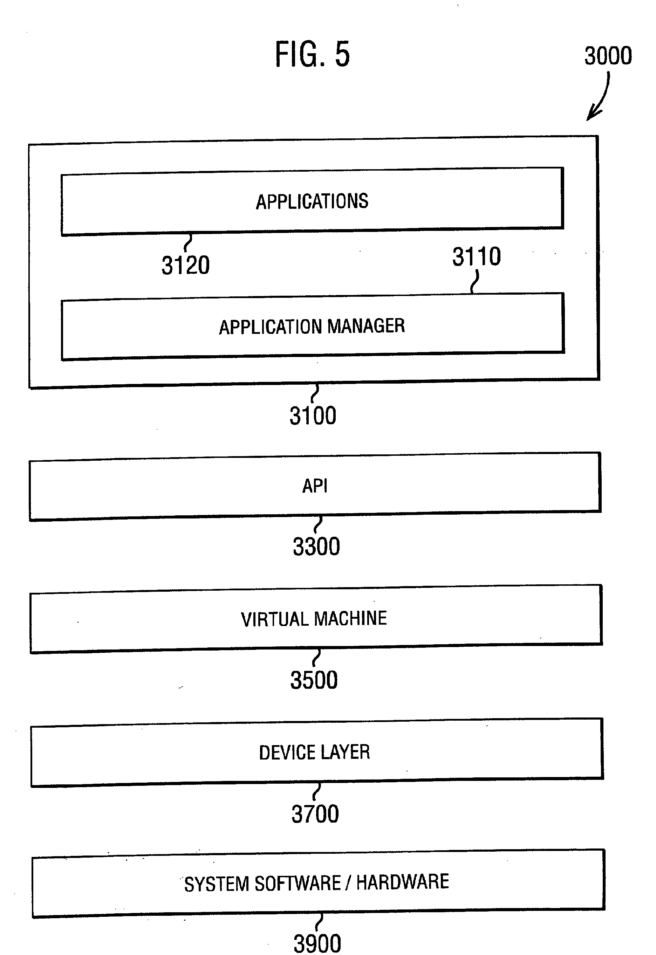

With reference to Figure 5, the software/hardware architecture 3000 of the receiver/decoder contains five software layers, organized so that the software can be implemented in any receiver/decoder and with any operating system. The various software layers are application layer 3100, application programming interface (API) layer 3300, virtual machine layer 3500, device interface layer 3700 (often abbreviated just to 'device layer') and system software/hardware layer 3900.

The application layer 3100 encompasses applications 3120 that are either resident in or downloaded to the receiver/decoder. They may be interactive applications used by customers, written in, for example, Java, HTML, MHEG-5 or other languages, or they may be applications used by the receiver/decoder for other purposes, for example for running such interactive applications. This layer is based on a set of open Application Programming Interfaces (APIs) provided by the Virtual Machine layer. This system allows applications to be downloaded to the hard disk, flash memory or RAM memory in the receiver/decoder on-the-fly or on demand. The application code can be transmitted in compressed or uncompressed format using protocols such as Data Storage Media Command and Control (DSMCC), Network File Server (NFS) or other protocols.

The API layer 3300 provides high-level utilities for interactive application development. It includes several packages that make up this high-level API. The packages provide all the functionality necessary to run interactive applications. The packages are accessible by the applications.

In a preferred embodiment the API is adapted for applications written in the Java, PanTalk or such similar programming languages. Furthermore, it can facilitate the interpretation of HTML and other formats, such as MHEG-5. Besides these features, it also includes other packages and service modules that are detachable and extensible as requirements dictate.

The virtual machine layer 3500 is composed of language interpreters and various modules and systems. This layer, managed by a kernel 3650 (not shown), consists of everything necessary to receive and execute interactive applications in the receiver/decoder.

The device interface layer 3700 includes a Device Manager and software devices (generally referred to herein as just 'devices'). Devices are software modules which consist of the logical resources necessary for management of external events and physical interfaces. The device interface layer, under the control of the Device Manager, manages communication channels between drivers and applications and provides enhanced error exception checking. Some examples of managed (hardware) devices are: card readers 3722 (not shown), modems 3730 (not shown), network 3732 (not shown), PCMCIA (Personal Computer Memory Card International Association), LED display and so on. Programmers do not have to deal with this layer directly, since the API layer controls the devices from above.

The system software/hardware layer 3900 is provided by the manufacturer of the receiver/decoder. Because of the modularity of the system and because services supplied by the higher-level operating system (such as event scheduling and memory management) are part of the virtual machine and kernel, the higher layers are not tied to a particular real-time operating system (RTOS) or to a particular processor.

Typically the virtual machine layer 3500, occasionally in combination with the device interface layer 3700 and/or API 3300, is referred to as the 'middleware' of the receiver/decoder.

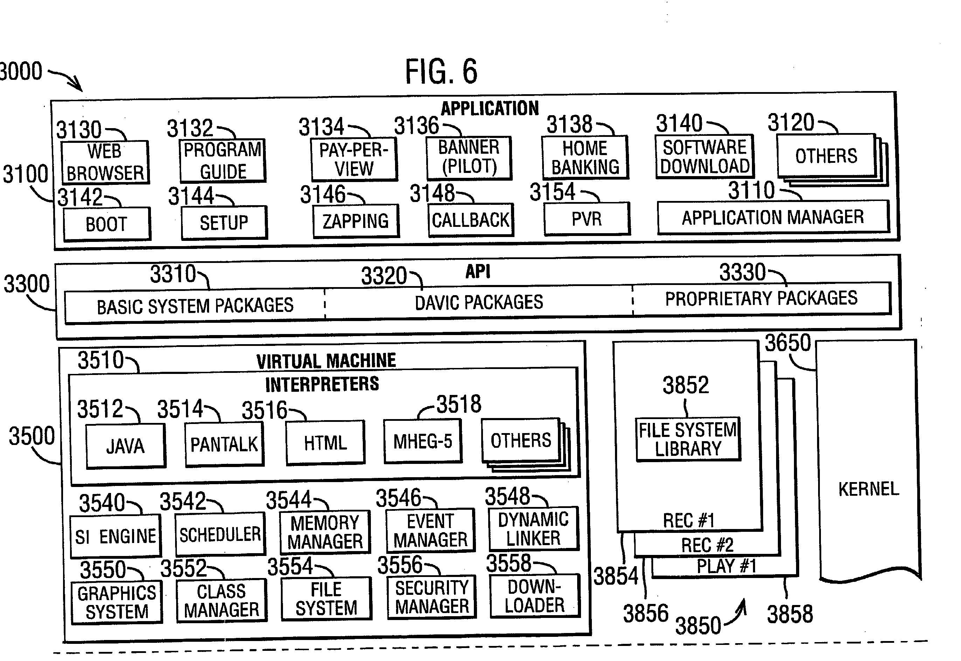

With reference to Figure 6 the software architecture of the receiver/decoder 3000 corresponding to the top half of Figure 5 (comprising the application layer 3100, API layer 3300 and virtual machine layer 3500) will now be described in more detail.

Interactive applications are applications that the user interacts with, for example, to obtain products and services, such as electronic program guides, telebanking applications and games.

There are two types of application in the application layer 3100, plus the Application Manager 3110. There are interactive applications such as a Web Browser 3130 which can be added at any time as long as they conform to the API 3300, and there are resident applications which manage and support the interactive applications. The resident applications are substantially permanent and include the following:
- Boot. The Boot application 3142 is the first application launched when the receiver/decoder is powered on. The Boot application first starts the Application Manager 3110, and then starts the "Manager" software modules in the virtual machine 3500, such as the Memory Manager 3544 and the Event Manager 3546.
- Application Manager. The Application Manager 3110 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 3144 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 3146 is used to change channels using the Program-up, Program-down and numeric keys. When another form of zapping is used, for example, through a banner (pilot) application, the Zapping application is stopped.
- Callback. The Callback application 3148 is used to extract the values of various parameters stored in the receiver/decoder memory and return these values to the commercial operator via modemmed back channel 1070 (not shown), or by other means.

Other applications in the application layer 3100 include a program guide application 3132, a pay-per-view application 3134, a banner (pilot) application 3136, a home banking application 3138, a software download application 3140 and a PVR (personal video recorder) application 3154 (see below).

As noted above, the Application Programming Interface (API) layer 3300 contains several packages. These include basic system packages 3310, used, for example, to access basic features of the virtual machine, DAVIC packages 3320, and proprietary packages 3330, used to access features ofthe software architecture unique to the principal software vendor.

Considered in more detail, the virtual machine 3500 includes the following:
- Language Interpreters 3510. Different interpreters can be installed to conform to the type of applications to be read. These include Java interpreters 3512, PanTalk interpreters 3514, HTML interpreters 3516, MHEG-5 interpreters 3518 and others.
- Service Information (SI) Engine. The SI Engine 3540 loads and monitors common Digital Video Broadcasting (DVB) or Program System Information Protocol (PSIP) tables and puts them into a cache. It allows access to these tables by applications which need the data contained in them.
- Scheduler 3542. This module allows for pre-emptive, multithreaded scheduling with each thread having its own event queue.
- Memory Manager 3544. This module manages the access to memory. It also automatically compresses data in memory when necessary and performs automatic garbage collection.
- Event Manager 3546. This module allows events to be triggered according to priority. It manages timer and event grabbing and allows applications to send events to each other.
- Dynamic Linker 3548. This module allows the resolution of addresses arising from native Java functions, loads native methods from a Java class downloaded into RAM and resolves calls from downloaded native codes towards ROM.
- Graphics System 3550. This system is object-orientated and optimized. It includes graphic window and object management as well as a vectorial font engine with multi-language support.
- Class Manager 3552. This module loads classes and resolves any class referencing problems.
- File System 3554. This module is compact and optimized to manage a hierarchical file system with multiple ROM, flash, RAM and DSMCC volumes. Flash integrity is guaranteed against any incidents.
- Security Manager 3556. This module authenticates applications and controls the access of applications to sensitive memory and other zones of the set-top box.
- Downloader 3558. This module uses automatic data loading from a remote DSMCC carousel or through the NFS protocol, with downloaded files accessed in the same way as resident ones. Memory clear-up, compression and authentication are also provided.

Furthermore, the DAVIC resource notification model is supported so that client resources are efficiently managed.

A kernel 3650 manages the various different processes running in the virtual machine 3500 and device interface layer 3700 (not shown). For efficiency and reliability reasons, the kernel implements relevant parts of the POSIX standard for operating systems.

Under control of the kernel, the virtual machine (running Java and Pantalk applications) runs in its own thread, separate to other 'server' elements of the operating system, such as the mass storage server 3850 (not shown). Corresponding provisions, such as requiring Thread IDs to be passed as parameters in system calls, are also made in the API layer 3300 to allow the applications 3120 to benefit from the multithreaded environment.

By providing multiple threads, more stability can be achieved. For example, if the virtual machine 3500 ceases to operate for some reason, by suffering a crash or being blocked for a long time by an application trying to access a device, other time-critical parts of the system, such as the hard disk server, can continue to operate.

As well as the virtual machine 3500 and kernel 3650, a hard disk video recorder (HDVR) module 3850 is provided for handling the recording and playback functions of the hard disk 2210 or other attached mass storage component. The server comprises two separate threads 3854, 3856 handling recording, one thread 3858 for handling playback, and a file system library 3852 for interfacing with the mass storage components.

An appropriate one of the threads 3854, 3856, 3858 in the hard disk video recorder (HDVR) 3850 receives commands (such as a command to start recording a particular programme) from clients such as the personal video recorder (PVR) application 3154, in response to the user pressing a 'record' button, for example.

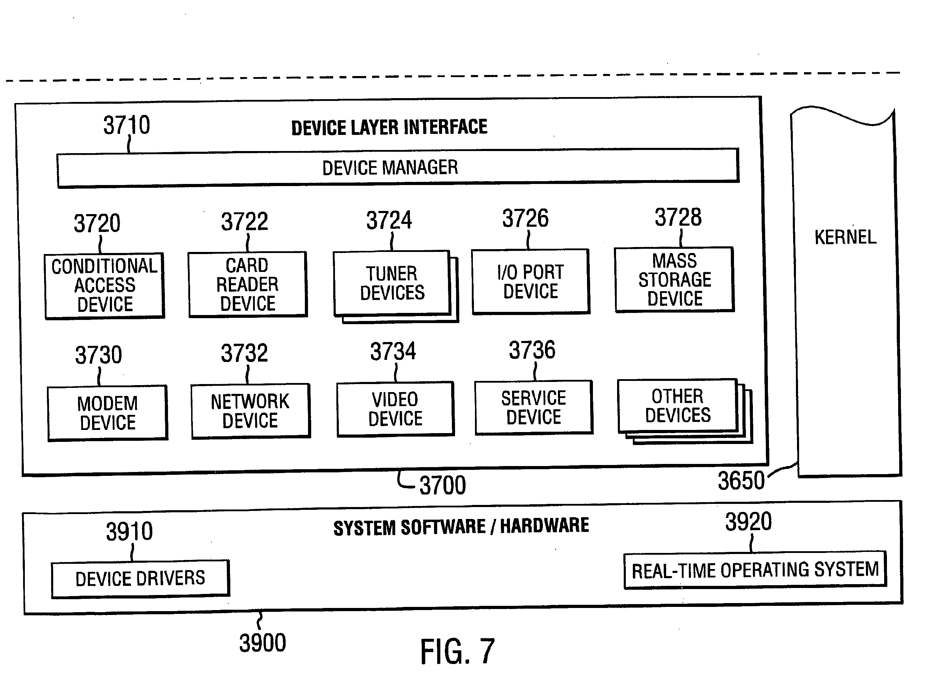

In turn, the thread in question then interacts with the service device 3736 (shown in Figure 7) to set up and synchronise the parts of the receiver/decoder handling the bit stream to be recorded or played back. In parallel, the thread also interacts with the file system library 3852 to coordinate the recording or playback operation at appropriate places on the hard disk 2210 (not shown).

The file system library 3852 then sends commands to the mass storage device 3728 (also shown in Figure 7) which tell the mass storage device 3728 which sub-transport stream (STS) to transfer (via a FIFO buffer), and on which hard disk target the stream should be stored. Allocation of clusters on the hard disk and general file management is carried out by the file system library 3852, the mass storage device itself being concerned with lower level operations.

The service device 3736 mentioned above is unique amongst the devices in that it does not relate to a physical component of the receiver/decoder. It instead provides a high level interface which groups together in a single 'instance' the various sets of tuner, demultiplexer, remultiplexer and hard disk devices in the receiver/decoder, freeing higher level processes from the difficulties of coordinating the various sub-devices.

With reference to Figure 7 the software architecture of the receiver/decoder 3000 corresponding to the bottom half of Figure 5 (comprising the device interface layer 3700 and the system software and hardware layer 3900) will now be described in more detail.

Further devices provided in the device layer include the conditional access device 3720, tuner devices 3724 corresponding to the two (or potentially more) tuners 2016, 2018 of Figure 4, the video device 3734, the I/O port device 3726, and the service device 3736 and mass storage device 3728 mentioned above.

In broad terms, a device can be regarded as defining a logical interface, so that two different devices may be coupled to a common physical port. Certain devices may communicate among themselves, and all devices also operate under the control of the kernel 3650.

Before using the services of any device, a program (such as an application instruction sequence) has to be declared as a "client", that is, a logical access-way to the device or the device manager 3710. The manager gives the client a client number which is referred to in all accesses to the device. A device can have several clients, the number of clients for each device being specified depending on the type of device. A client is introduced to the device by a procedure "Device: Open Channel". This procedure assigns a client number to the client. A client can be taken out of the device manager 3710 client list by a procedure "Device: Close Channel".

The access to devices provided by the device manager 3710 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

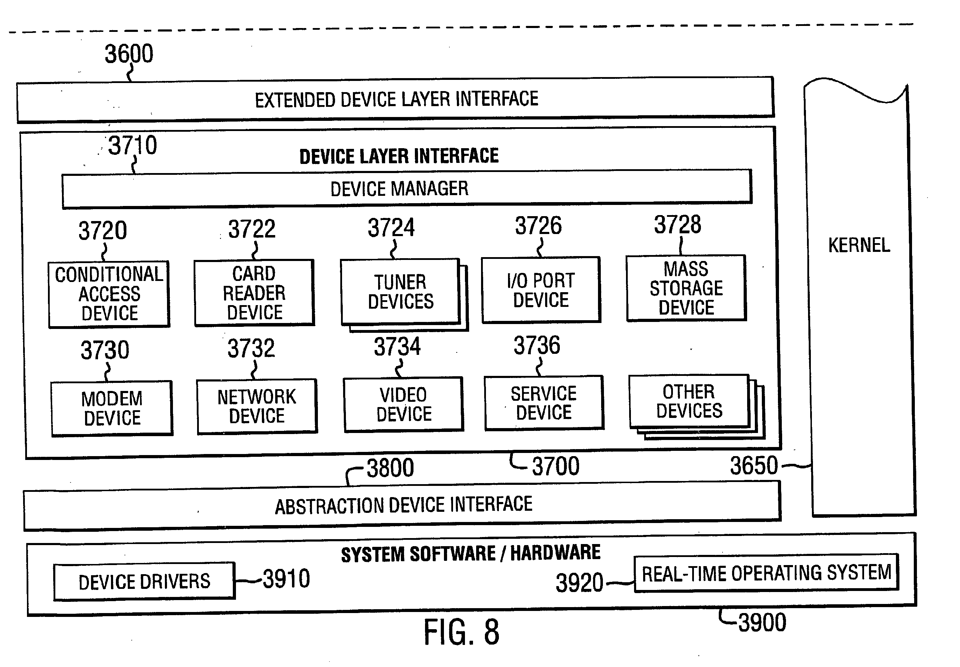

In a second embodiment of the receiver/decoder, the lower half of the architecture of the receiver/decoder is replaced by the layers shown in Figure 8.

In this embodiment, an extended device layer interface (EDLI) 3600 is provided between the virtual machine 3500 (not shown) and the device interface layer 3700, and an abstraction device interface 3800 is provided between the device interface layer 3700 and the system software/hardware layer 3900. Otherwise, like parts are indicated with like reference numerals.

The extended device layer interface (EDLI) 3600 provides a dedicated interface between the virtual machine 3500 and the device interface layer 3700 and generally provides multithreading support to the device interface layer. Functions of the EDLI include routing asynchronous events to the appropriate thread in the middleware (since the device interface layer need not itself support multithreading) and routing messages between threads.

The abstraction device interface 3800 provides a further interface between the device interface layer 3700 and the device drivers 3910 in the system software/hardware layer 3900. By providing such an interface, the large and complex device layer 3700 can be made hardware independent to a greater degree.

### Routing of data in the receiver/decoder

Three generally complementary systems for routing and data are now described.

In overview, the first system allows (generally at a hardware level) the flexible routing of principally audio/visual data within a receiver/decoder, and is particularly suited to route such data in a dynamic fashion.

The second system operates at an architecturally higher level, and allows the transfer of such data to and from a mass storage device (such as a hard disk), and in particular allows such a transfer to be managed in an efficient manner.

The third system relates to both the first and the second system, and allows the manipulation of different services (comprising such audio/visual data as mentioned above) using dedicated software and hardware devices (such as a 'video' and 'service' device), and in particular allows the operation and synchronisation of such services in both "push" and "pull" modes.

The first system is described in more detail below, followed in turn by a detailed description of the second and third systems.

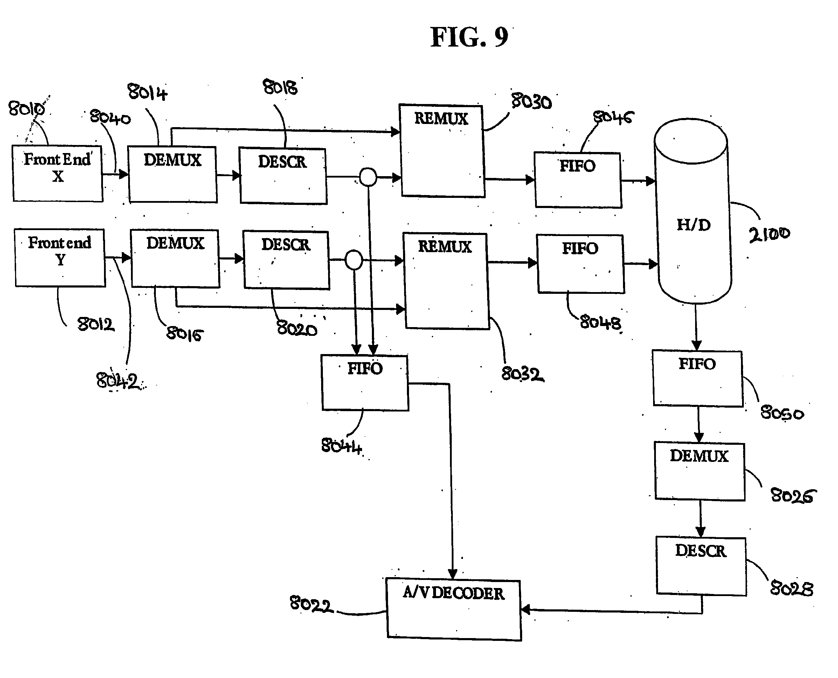

The routing of data in the receiver/decoder 2000 is now described with reference in particular to Figures 9 to 14. Data is routed through the receiver/decoder 2000 in accordance with a number of possible routing configurations. These different routing configurations are dynamically arranged in accordance with realtime user routing control instructions. In order to facilitate these flexible routing capabilities, routing in the receiver/decoder 2000 is handled by software implemented routing apparatus, which is used to control the interconnection between the components used for routing in the receiver/decoder 2000.

Figures 9, 10 and 11 schematically illustrate the interconnections between various components of the receiver/decoder 2000 used for routing the remote control 2080, and a flow diagram illustrating the operation of the routing apparatus respectively.

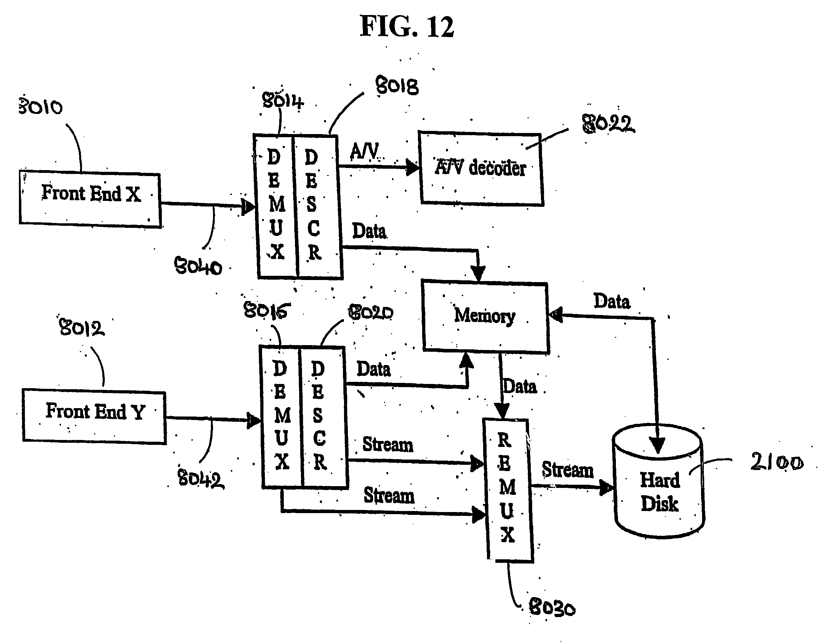

Figures 12, 13 and 14 show typical examples of different possible routing configurations of the receiver/decoder 2000. In the drawings, like reference numerals have been used to indicate like parts.

The interconnection of routing components in the receiver/decoder will now be described.

With reference to Figure 9, the receiver/decoder 2000 includes two inputs, in the form of two front ends 8010, 8012. Each front end 8010, 8012 is a schematic representation of the tuner/demodulator 2016, 2012 and 2018, 2014 respectively, as shown in Figure 4. Each front end 8010, 8012 is configured to receive and demodulate one of a pair of satellite signal feeds 2020, 2022 (also shown in Figure 4). The satellite feeds 2020, 2022 are transmitted from a digital broadcast centre 1000 (shown in Figure 1) and typically contain multiple channels containing various television programmes and/or applications, compressed and coded in the form of a digital data stream. As discussed above, the data stream is preferably compressed and coded in MPEG format.

After reception and demodulation, the output from each front end 8010, 8012 is in the form of a data stream 8040, 8042 containing video, audio and data components of the received programmes and/or applications.

The demodulators 2012, 2014 are connected to the descrambler/demultiplexer/remultiplexer 2010 (shown in Figure 4). As shown in more detail in Figure 9, each of the front ends 8010, 8012 is connected to demultiplexers 8014, 8016 which are each configured to demultiplex each of the data streams 8040, 8042, and extract the various audio, video and data components of the programmes and/or applications. The demultiplexers 8014, 8016 are in turn connected to descramblers 8018, 8020, each associated with a demultiplexer 8014, 8016, and respectively configured to descramble data streams 8040, 8042. The descrambling occurs in accordance with the specific accessibility determined by the conditional access system as described above.

The demultiplexers 8014, 8016 are also connected directly to storage means, in the form of a hard disk 2100, via remultiplexers 8030, 8032 and FIFO buffers 8046, 8048. Thus, it is possible for data to be stored in a scrambled format on the hard disk 2100.

The descramblers 8018, 8020 are also connected to a FIFO buffer 8044. The FIFO buffer 8044 is in turn connected to an output, which is in the form of an audio/video decoder 8022. The audio/video decoder 8022 is in turn connected to a display means, in the form of a television 10000. The audio/video decoder 8022 is in part a schematic representation of the audio DAC 2034, the MPEG video decoder 2028, the graphic engine 2032 and the PAL/SECAM encoder 2036, as shown in Figure 4.

The remultiplexers 8030, 8032 are configured to remultiplex the demultiplexed and, in some cases, descrambled data streams 8040, 8042 before they are written to the hard disk 2100. In this way, the data streams 8040, 8042 are configured for storage on the hard disk 2100.

The hard disk 2100 is connected via a FIFO buffer 8050, similar to those described above, and a demultiplexer 8026 and descrambler 8028, to the audio/video decoder 8022.

It is to be appreciated that although the FIFO buffers are shown discretely, it is possible for all the FIFO buffers to be located in a contiguous block of RAM, which can be dynamically allocated based on availability.

Each of the components of the receiver/decoder 2000 are also connected to the host CPU 2002 and digital TV co-processor 2004, as shown in Figure 4.

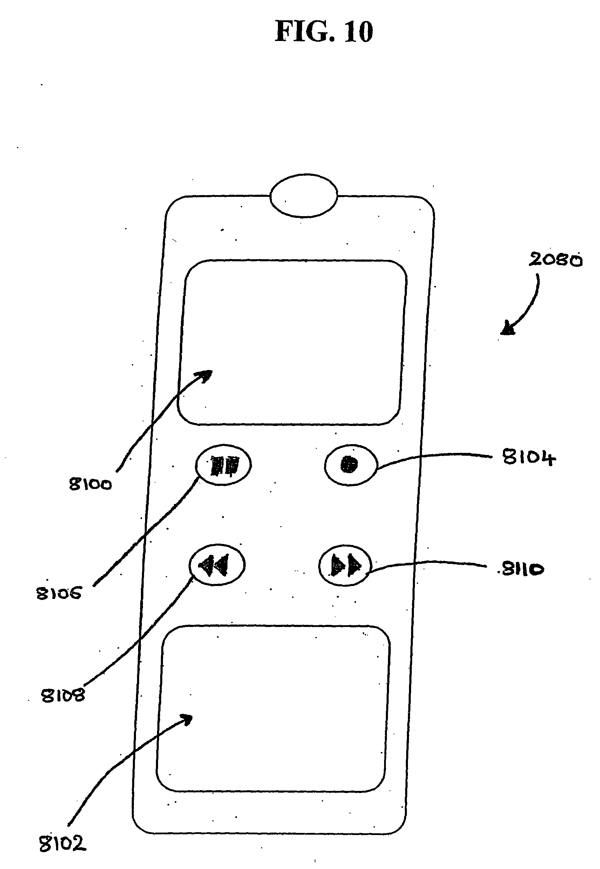

A schematic diagram of the user interface of the receiver/decoder, which is in the form of a remote control 2080 is shown in Figure 10. The remote control 2080, includes a numeric keypad, generally indicated by reference numeral 8100, as well as menu and function keypad indicated by reference numeral 8102. The remote control also includes the following additional buttons, typically associated with time-shifting: record 8104; pause 8106; rewind 8108; and forward 8110.

### Routing apparatus

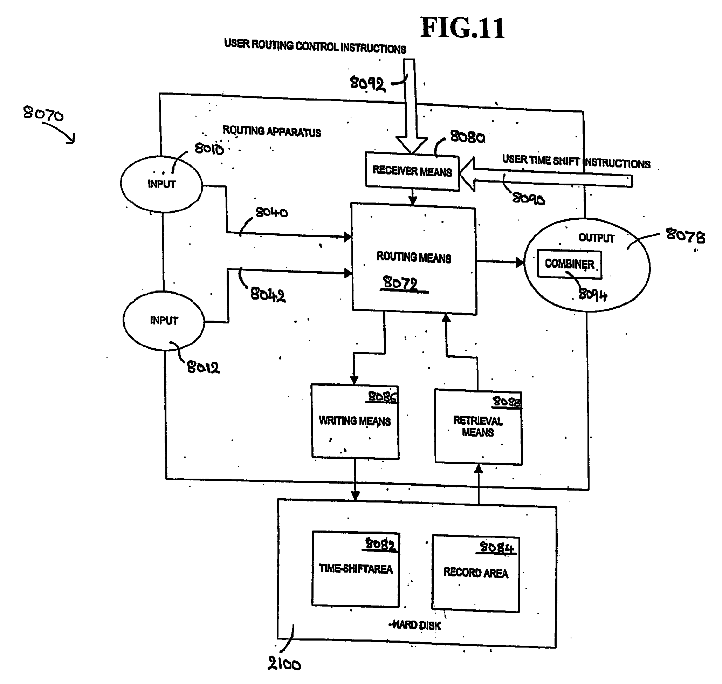

As mentioned above, the routing of data within the receiver/decoder 2000 is configured and controlled by the routing apparatus 8070 (shown in Figure 11) which controls the routing of data between the various hardware components of the receiver/decoder 2000 described with reference to Figure 9 above.

As shown in Figure 11, the routing apparatus 8070 includes routing means 8072 which, in one embodiment may be in the form of a routing module, provided as part of the virtual machine layer 3500, shown in Figure 6. In another possible embodiment, the routing means 8072 may be in the form of a routing device forming part of the device layer interface 3700, shown in Figure 7. In yet a further embodiment, the routing means 8072 may form part of the service device 3736.

The routing means 8072 is configured to route data streams 8040, 8042 received by the inputs, or front ends 8010, 8012, to an output 8078, as well as to the storage means, in the form of the hard disk 2100. The routing means 8072 is also configured to route the data streams 8040, 8042 to both the output 8078 and the hard disk 2100.

The output 8078 in part includes the audio/video decoder 8022. The output 8078 further includes combining means 8094, for combining audio and video components from a number of separate programmes into a form suitable for output on the television 10000. In one embodiment, the combining means 8094 may be implemented by the graphic engine 2032 and during PCM mixing, indicated at 2030.

Thus, in the case of video data, typically a composite image is created, which contains a mosaic of the or each television programme, typically in the form of a display containing a "picture-in-picture". To create a "picture-in-picture", the MPEG decoder 2028, under control of the VIDEO device 3734 creates separate decoded video outputs corresponding to each data stream 8040, 8042 which are then overlaid by the graphic engine 2032.

Typically audio data is combined using "voice over" techniques implemented during PCM mixing, indicated at 2030.

In another embodiment, the output 8078 includes a number of independent output ports each capable of outputting an independent data stream. In this case, the output 8078 is connected to a plurality of separate televisions 10000.

The routing of the data streams 8040, 8042 is controlled by user routing control instructions, generally indicated by reference numeral 8092, which are received by receiver means 8080, which enables the user to control the operation of the routing means 8072. Typically, user routing control instructions 8092 are input by the user via the remote control 2080, which is configured to send infrared signals to the front panel 2054.

The routing apparatus 8070 also includes writing means 8086, for writing data to the hard disk 2100, and retrieval means 8088, for retrieving data from the hard disk 2100. In the preferred embodiment, the writing means is in the form of the mass storage device 3728, which controls the operation of the FIFO buffers 8046 and 8048, and in the preferred embodiment, the retrieval means may also be in the form of the mass storage device 3728, as shown in Figure 7. Typically, the FIFO buffers 8046, 8048 and 8050 are in the form of a memory buffer dynamically allocated, and controlled via software. In one embodiment, the FIFO buffers are allocated and released via commands issued by a FIFO device.

The hard disk 2100 includes two storage areas, a time-shift storage area, 8082 and a record storage area 8084. The time-shift storage area 8082 is used for temporarily storing programmes contained in the data streams 8040, 8042 for time-shift purposes, and the record storage area is used for recording programmes contained in the data streams 8040, 8042. Thus, the routing means 8072 is further configured to route the data streams 8040, 8042 to the time-shift storage area 8082, to the record storage area 8084, and to both the time-shift and the record storage areas 8082, 8084.

Typically, the time-shift storage area 8082 is implemented in a circular buffer on the hard disk 2100; thus typically only a limited quality of time-shift information can be stored. Hence, for example, a fifteen minute buffer may be provided. However, it is also possible to co-ordinate the capacity of the time-shift and record storage areas 8082, 8084 on the basis of hard drive capacity and user requirements.

The routing means 8070 is also configured to receive user time-shift control instructions, indicated by reference numeral 8090, which are also received by the receiver means 8080.

Time shifting of data in the receiver/decoder 2000 is controlled by the user via the remote control 2080. Thus, the user issues time-shift control instructions 8090 to the routing means 8072 via the remote control 2080, which causes a desired programme to be routed to, and stored in, the time-shift storage area 8082. Thus, when a particular time-shift operation is requested by the user, by pressing a time-shift control button 8104 , 8106, 8108 and 8110 on the remote-control 2080, a data stream may be routed to and from the time-shift storage area 8082 as appropriate. Further details relating to time-shifting will emerge in the discussion below.

The operation of the routing apparatus will now be described.

In use, each of the data streams 8040, 8042 may be independently routed to the output 8078, and to either the time-shift storage area 8082 or record storage area 8084 of the hard disk 2100, in accordance with received user routing control instructions 8092 and user time-shift control instructions 8090.

Thus, the routing means 8072 may be configured to route data stream 8040 from the input 8010 to the output 8078, which, as mentioned above, is connected to a television 10000 via the audio/video decoder 8022, for live viewing. At the same time, the routing means 8072 can route the data stream 8040 from the input 8010 to the time-shift storage area 8082 for time-shift purposes, to the record storage area 8084 for recording, and to both the time-shift and record storage areas 8082, 8084.

Similarly, the routing means may also be configured to route data stream 8042 to the output 8072 and to the time-shift and record storage areas 8082, 8084.

The actual routing of the data streams 8040, 8042 is controlled by the user in realtime, via the remote control 2080. Thus, it is possible for a user to setup an initial routing configuration and then, at will, alter the routing configuration in realtime.

Thus, for example, it is possible to route a first programme, contained in data stream 8040 to the output 8078 for live viewing, and to route a second programme, contained within datastream 8042 to the record storage area 8084 of the hard disk 2100, for recording. As the user is watching the first programme, he may however decide to switch over to the second programme which is being recorded, by changing channels on the remote control 2080. In this case, the second programme, contained within datastream 8042, is routed to the output 8078 as well as to the record storage area 8084.

While watching the second programme, the first programme may no longer be routed to the output 8078, or may continue to be routed to the output 8078, in which case, the first and second programmes are combined by the combining means 8094. Typically, the user may specify, via a function key on the remote control 2080, the particular format of the mosaic of the combined display.

It is also possible for a user to view a first programme and monitor and time-shift a second programme. Thus, for example, the user may route a first programme to the output 8078, and at the same time route a second programme to the output 8078, where it is combined with the first programme, in the form of a monitoring window. The second programme may simultaneously be routed to the time-shift storage area 8082, where it is buffered for time-shift purposes. Thus, if a highlight occurs on the second programme, which is being monitored, the user may switch to the second programme and instantly replay the highlight, using the buffered information stored in the time-shift storage area 8082.

It is also possible for the user to pause the first programme, in which case it will be routed to the time-shift storage area 8082, and to then switch over to the second programme. It is then possible to return to the first programme, and resume the first programme, in which case, the first programme is routed from the time-shift storage area 8082 to the output 8078. The user may also skip though the segment of the first programme stored in the time-shift storage area 8082, using the forward button 8110.

It is further possible, at any time, for the user to begin recording the first programme, in which case it too is routed to the record storage area 8084. In this case, the first programme could be routed to the output, for live viewing, as well as to the time-shift and record storage areas 8082, 8084. This allows the user to view the programme live, while recording it, and enables the user to instantly review segments of the programme if desired, or indeed to time-shift the programme in some other way, using the buffered time-shift information.

It is also possible to arrange certain default routing configurations, for example, the user may specify that any programme viewed live should also be routed to the time-shift storage area 8082, to enable live programmes to be time-shifted if desired.

In should also be noted that it is possible configure the routing means 8072 to begin routing a live programme to the time-shift storage area 8082 in advance. In this case, when a user begins watching the "live" programme, it can be forwarded, for example, to skip over commercial breaks.

Each of Figures 12, 13 and 14 illustrate typical examples of the possible interconnection between the front ends 8010, 8012 and the audio/video decoder 8022 and/or the hard disk 2100, via, depending on the routing configuration, demultiplexers 8014, 8016 and 8026, and respective descramblers 8018, 8020 and 8028 and remultiplexers 8030, 8032. These examples merely indicate possible routing scenarios, which may be set up dynamically in realtime under direction of the user as discussed above.

In order to simplify the illustrative examples, the FIFO buffers 8044, 8046, 8048 and 8050 have not been shown.

Three examples of possible routing configuration of the receiver/decoder will now be given.

The first example will now be described, with reference to Figure 12. In this configuration, the receiver/decoder 2000 is configured to allow a first programme to be watched and a second programme to be recorded. Thus, the front end 8010 is connected to demultiplexer 8014 and descrambler 8018, which is in turn connected directly to the audio/video decoder 8022. Thus, data stream 8040 is routed directly from the front end 8010 to the audio/video decoder 8022, which decompresses and decodes the MPEG data stream and configures the data stream 8040 for input to the television 10000. In this way, a first programme may be viewed in realtime.

In parallel with the processing of the first data stream 8040, the second data stream 8042 is demultiplexed and descrambled by demultiplexer/descrambler 8016, 8020 thereby extracting the relevant audio, video and data components of a desired programme, before these components are once again remultiplexed into a form suitable for storage on the hard disk 2100. In this way a second programme may be recorded. This programme may then later be retrieved and routed to the audio/video decoder 8022.

It is also possible for a user to dynamically reverse the routing of the data streams 8040, 8042. Thus, in realtime, via the user interface, the interconnection between the components may be altered, and data stream 8040 can be routed to the hard disk 2100, and data stream 8042 can be routed to the audio/video decoder 8022.

The second example will now be described.

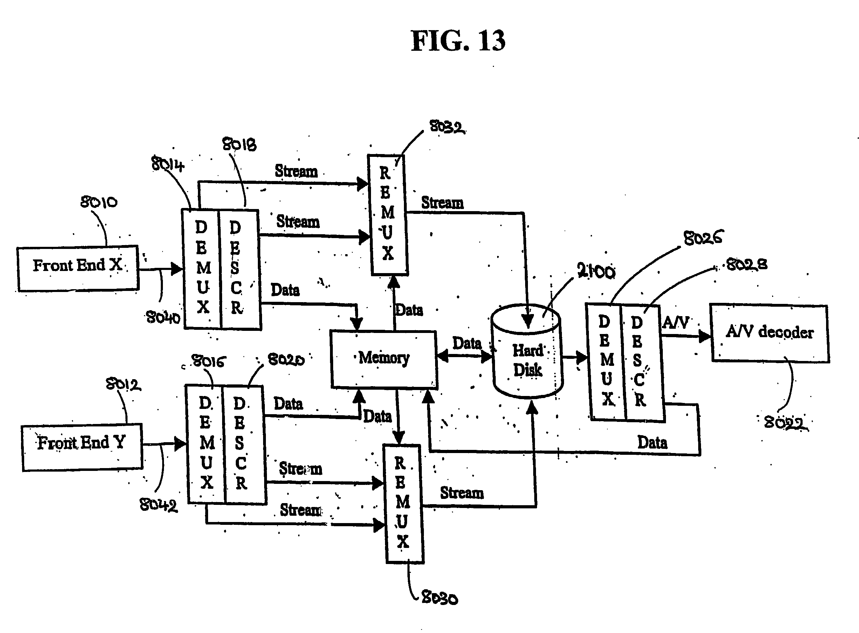

In Figure 13, the receiver/decoder 2000 is configured to allow a first programme to be time-shifted and a second programme to be recorded. In this configuration, each front end 8010, 8012 is connected to a demultiplexer/descrambler 8014, 8018 and 8016, 8020 respectively which are in turn connected to remultiplexers 8030, 8032 which are then connected to the hard disk 2100. The hard disk 2100 is then connected to demultiplexer/descrambler 8026, 8028, which are connected to the audio/video decoder 8022. Thus, data streams 8040, 8042 are fed via the relevant demultiplexer, descrambler and remultiplexer to the hard disk 2100, arid then selectively retrieved and transferred to the audio/video decoder 8022.

Thus, in this routing configuration, it is possible to record a first programme, say a programme contained on data stream 8040, and to time-shift a second programme contained within data stream 8042. The first programme is stored in a pre-designated location within the record storage area 8084 on the hard disk 2100, which is pre-allocated based on the length of the programme. This programme may then later be retrieved and transferred to the audio/video decoder 8022. The second programme is stored in a circular buffer contained within the time-shift storage area 8082, also located on the hard disk 2100, for time-shift information. This programme may then be retrieved from the time-shift storage area 8082 and routed to the audio/video decoder 8022. It is also possible to record two programmes simultaneously, provided that sufficient hard disk capacity is available, in which case both data streams 8040, 8042 are routed to and stored in the record storage area 8084 of the hard disk 2100.

The third example will now be described.

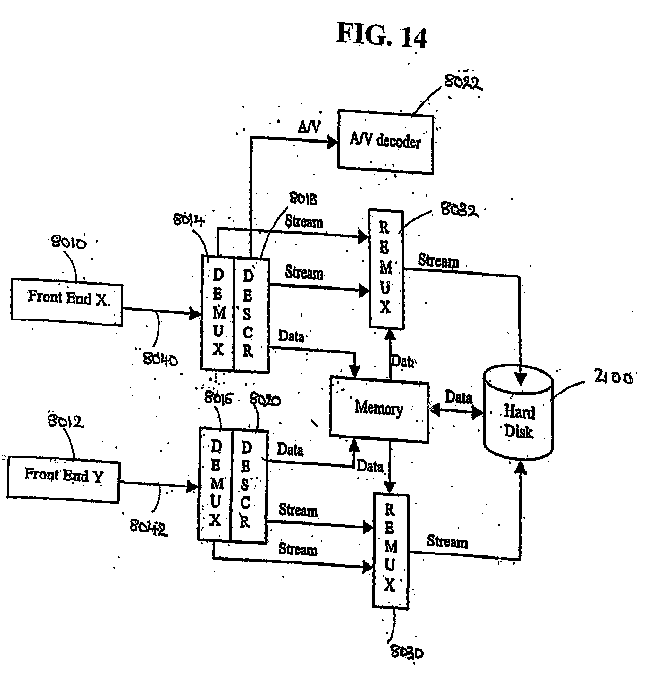

In Figure 14, the receiver/decoder 2000 is configured to allow a first programme to be viewed and time-shifted while a second programme is being recorded. In this configuration, each front end 8010, 8012 is connected to a demultiplexer/descrambler 8014, 8018 and 8016,8020 respectively and then via remultiplexers 8030, 8032 to the hard disk 2100, as described above. In addition, the demultiplexer/descrambler 8014, 8018 is also connected directly to the audio/video decoder 8022. A first programme contained within data stream 8040 is therefore routed to time-shift storage area 8082 of the hard disk 2100, as well as to the audio/video decoder 8022, thereby enabling the first programme to be watched at the same time as it is being buffered for time-shift purposes. Simultaneously, a second programme, contained within data stream 8042, is also routed to the record storage area 8084 of the hard disk 2100 for recording.

It is also possible to dynamically re-route the data streams 8040, 8042. Thus, it is possible to disconnect the demultiplexer/descrambler 8014, 8018 from the audio/video decoder 8022, and instead to connect the demultiplexer/descrambler 8016, 8020 to the audio/video decoder 8022. As described above, the demultiplexer/descrambler 8014, 8018 and demultiplexer/descrambler 8016, 8020 are not actually disconnected or connected to and from the audio/video decoder 8022, rather the data streams 8040, 8042 are selectively routed via the FIFO buffer 8044 to the audio/video decoder 8022.

It should be noted that the above examples illustrate a range of routing configurations available, merely to demonstrate the interconnection of various hardware components under different circumstances, and are by no means the only possible routing configurations available.

The dynamic routing capabilities of the receiver/decoder 2000, controllable by the user via the remote control, can make it possible for a user to alter the routing of programmes, in realtime, through the receiver/decoder 2000, and hence selectively view and record multiple programmes. Furthermore, the user can also control time-shifting of programmes received by the receiver/decoder 2000. In addition, the receiver/decoder 2000 may also enable a user to view multiple programmes on a single display, via the combining means 8094. Thus, a user is provided with a flexible system which enables the user to decide, in realtime, and at will, which of the received programmes will be viewed live, which will be time-shifted and which will be recorded. Furthermore, a user may selectively monitor one or more programmes on a single display.

A mass storage system, particularly suitable in the context of the routing system described above and generally operating at a higher architectural level, will now be described in some detail.

### Mass storage

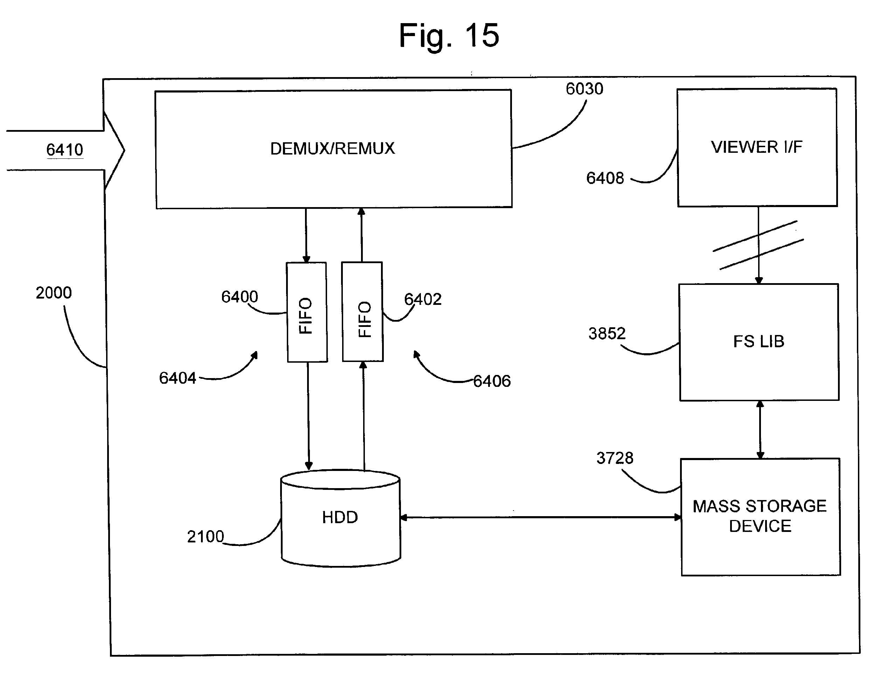

As described above, in order to allow the recording of television programmes for time-shifting and/or later viewing, a receiver/decoder comprises a storage device 2100, for example a hard disk as shown in Figure 15. The storage of a bit stream corresponding to a television programme on the hard disk 2100 may be initiated by a command having as parameters a source, that is the memory location from which the data to be stored will be read (for example a buffer, and so on), and a destination, that is the location to which the data should be written (for example a location on the hard disk 2100). A similar command may initiate the playback of a stored bit stream. In this case, the source parameter will be a location on the hard disk 2100. Furthermore, it may be required that a bit stream corresponding to a television programme be written to another device, for example a Firewire port, rather than to the hard disk 2100. The source and destination parameters of the command initiating the data transfer are selected according to the desired effect.

Once a transfer is under way, a further command may be used to control the transfer of the bit stream, the command being adapted to change at least one of the source and the destination.

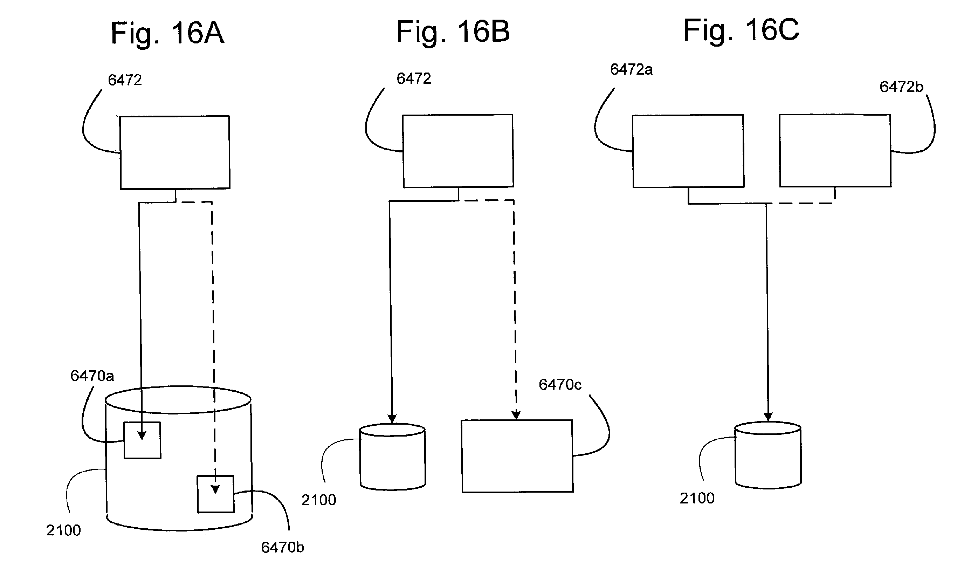

As shown in Figures 16A, 16B and 16C, the destination 6470 of the transfer may be changed from one location 6470a on the hard disk 2100 to another such location 6470b (Figure 16A) or from a location on a hard disk 2100 to another device 6470c (which may in fact be another hard disk, for example) (Figure 16B). The source 6472 of the transfer may additionally or alternatively be changed from a first device 6472a to a second device 6472b (Figure 16C).

In particular, such a command may be used to extend the transfer of a bit stream. For example, if the first command initiated the transfer of a bit stream to particular unused fragment 6470a of the hard disk 2100 (see Figure 16A) and the fragment became full, the second command might supply the address of a further unused fragment 6470b of the hard disk 2100 to which storage of the bit stream was to continue. This second command might be issued once the first fragment 6470a is full or in order to provide a more seamless transfer of the data, the second command might be issued before the first fragment 6470a is filled.

Similarly, when reading a stored bit stream from a hard disk 2100, a first command may specify that a certain amount of data was to be read, or that all data was to be read up to the end of a particular fragment. In this case, the second command may specify a further address (in the same fragment or in a new fragment) from which data is to be read.

In order to facilitate further the storage of bit streams on the hard disk 2100 in a particular receiver/decoder (see Figure 15), the hard disk has an input stream 6404 through which data to be stored passes, and an output stream 6406 through which data read from the storage device passes. The input and output streams 6404, 6406 are connected to the multiplexer/demultiplexer 2010 via respective input and output buffers which may for example take the form of FIFOs, 6400, 6402 as shown. The input stream 6404 is connected to a remultiplexer portion of the multiplexer 2010 which multiplexes the various streams (for example audio, video, subtitle, etc) to be stored. The output stream 6406 is connected to a demultiplexer portion of the multiplexer 2010 which demultiplexes the bit stream received from the hard disk 2100.

In order to store sections of a received bit stream, the receiver/decoder 2000 further comprises a process controller (for example the file system library 3852), a storage device (for example the mass storage device 3728 and the hard disk 2100) and a user or viewer interface 6408 which permits the user (directly or indirectly) to initiate or terminate storage of a programme or other defined section of a bit stream 6410 on the storage device. As is described in more detail below, the receiver/decoder 2000 is adapted to store a section of the bit stream 6410 (corresponding for example to a particular television programme) in appropriate memory locations within the hard disk 2100 by assigning a respective memory location of size much less than the actual or an anticipated bit count of the defined bit stream section and storing a corresponding portion of the incoming bit stream at said location, the steps being repeated until the storage of the bit stream is terminated, thereby to limit the extent of memory assigned during the storage of the bit stream but not employed for storage.

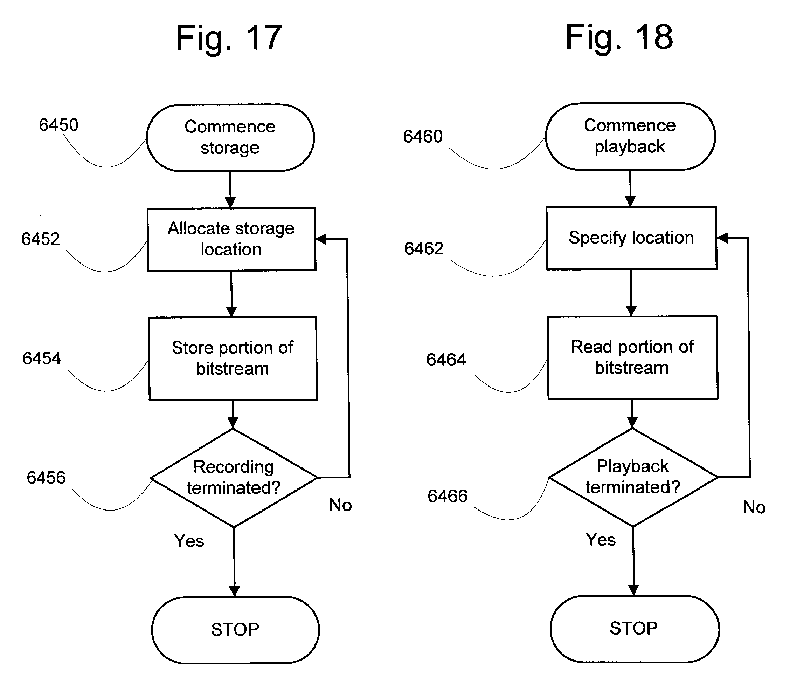

The procedure for storing a bit stream section is shown in overview in Figure 17.

Upon request by a user to commence recording (at step 6450) of a programme (for example by pressing a record button on a remote control or through some other user interface), a recording thread 3854,3856 (not shown in Figure 15) of the device interface layer 3400 is allocated for the recording of the required signal. The allocated recording thread 3854, 3856 communicates with the file system library 3852 which controls the recording process. The file system library 3852 determines the location on the hard disk 2100 to which the first portion of the bit stream is to be recorded (6452) and issues to the mass storage device 3758 of the device layer 3400 a first command, of the form START_WRITE(STREAM_ID, ADDRESS, LENGTH), to initiate the storage of a stream on the hard disk 2100. STREAM_ID is the memory address of the stream to be recorded (the input stream 6404); ADDRESS is the address on the hard disk 2100 to which the stream is to be written; and LENGTH is the amount of data to be written. The specified amount of data is then stored (6454) at the required address on the hard disk 2100 via the input FIFO 6400. The amount of data to be written, passed by the LENGTH parameter, is much less than the actual bit count of the bit stream representing the programme if this is know, or much less than an anticipated bit count of the programme. The bit count may be anticipated by obtaining the product of the duration of the programme and an average bit rate for the type of programme. Various types of programmes may have various average bit rates depending upon the quality which the user of the programme is likely to require or expect. For example, news reports, animated programmes, etc, may have low average bit rates, while films may have much higher average bit rates.

The START_WRITE command returns a handle, TRANSFER_HANDLE, which identifies the transfer process for future reference.

When the file system library 3852 receives confirmation that the command has been executed, for example via an event or an interrupt raised by the mass storage device 3758, and if recording of the bit stream has not been terminated for any reason (determined at 6456), a second command of the form CONT_WRITE(TRANSFER_HANDLE, ADDRESS, LENGTH) is sent by the file system library 3852 to the mass storage device 3758 to continue the storage of the data stream. The ADDRESS parameter to this command indicates the address to which the next portion of data is to be stored; the LENGTH parameter indicates the amount of data to be stored to that address; and the TRANSFER_HANDLE is the handle returned by the START_WRITE command. Commands of this second type continue to be made, once the preceding command is executed, until a preset duration of transmission has been recorded, or until recording has been terminated by the user or for any reason.

The ADDRESS parameter of the commands may correspond to the first address in an unused fragment of the hard disk 2100 and the LENGTH parameter may correspond to the size of that fragment. For example, the command CONT_WRITE(TRANSFER_HANDLE, 0x10000, 0x800) may be issued, where 0x10000 is the first address of an unused fragment of size 0x800. In this way, the data stream may be stored to the hard disk 2100 with the minimum of involvement of the virtual machine 3300. Alternatively, this fragment could be filled by a series of commands such as:
CONT_WRITE(TRANSFER_HANDLE, 0x10000, 0x300)
CONT_WRITE(TRANSFER_HANDLE, 0x10300, 0x200)
CONT_WRITE(TRANSFER_HANDLE, 0x10500, 0x150)
CONT_WRITE(TRANSFER_HANDLE, 0x10650, 0x150)
which has the result that less unused capacity is allocated to a particular stream at any time. This may be advantageous, for example when recording more than one programme simultaneously to a hard disk having little remaining capacity.

Instead of single addresses and numbers of bytes of data, any or each command may pass as parameters lists of addresses and corresponding numbers of bytes of data, especially when the hard disk 2100 is already somewhat fragmented and/or approaching capacity.

The recording of part of a bit stream 6412 onto the hard disk 2100 will now be further described with reference to Figure 18.

The file system library 3852 issues the first command START_WRITE( INPUT_STREAM_ID, [0x00040, 0x00260, 0x00760], [0x120, 0x2C0, 0x900]) to record a first portion 6414 of the bit stream 6412. 0x00040 is the address of a first unused fragment 6416 of the hard disk 2100 having size 0x120, and a first block 6414a of the first portion 6414 of the bit stream 6412 is written to that fragment 6416. A second block 6414b of the first portion 6414 of the bit stream is written to a second fragment 6418.

Both the second fragment 6418 and the second block 6414b of the first portion 6414 of the bit stream 6412 have size 0x2C0. A third fragment 6420 has size 0xAE0, and a third block 6414c of the first portion 6414 of the bit stream 6412 is written to that fragment 6420.

Having completed the execution of the first command, the mass storage device 3758 raises an event indicating to the file system library 3852 that the data has been stored successfully. The file system library 3852 then issues the second command CONT_WRITE(TRANSFER_HANDLE, [0x01060, 0x01360], [0x1E0, 0x4A0]). 0x01060 is the address of the remainder 6420b of the third fragment 6420, which is now filled with a first block 6422a of a second portion 6422 of the bit stream 6412. A second block 6422b is written to a fourth fragment 6424 of the hard disk 2100 at 0x01360, both the fourth fragment 6424 and the second block 6422b of the second portion 6422 have size 0x4A0.

Having complete the execution of the second command, the mass storage device 3758 once again raises an event indicating to the file system library 3852 that the data has been stored successfully. The file system library 3852 then issues a further command CONT_WRITE(TRANSFER_HANDLE, [0x01860], [0x800]). In this case, only one address value and one length value (0x01860, 0x800 respectively) have been supplied. This address and length correspond to the address and size of a fifth fragment 6426 of the hard disk 2100, to which the whole of a third portion 6428 of the bit stream 6412 is written. The procedure then continues, with further commands being issued to record further portions of the bit stream until recording is terminated.

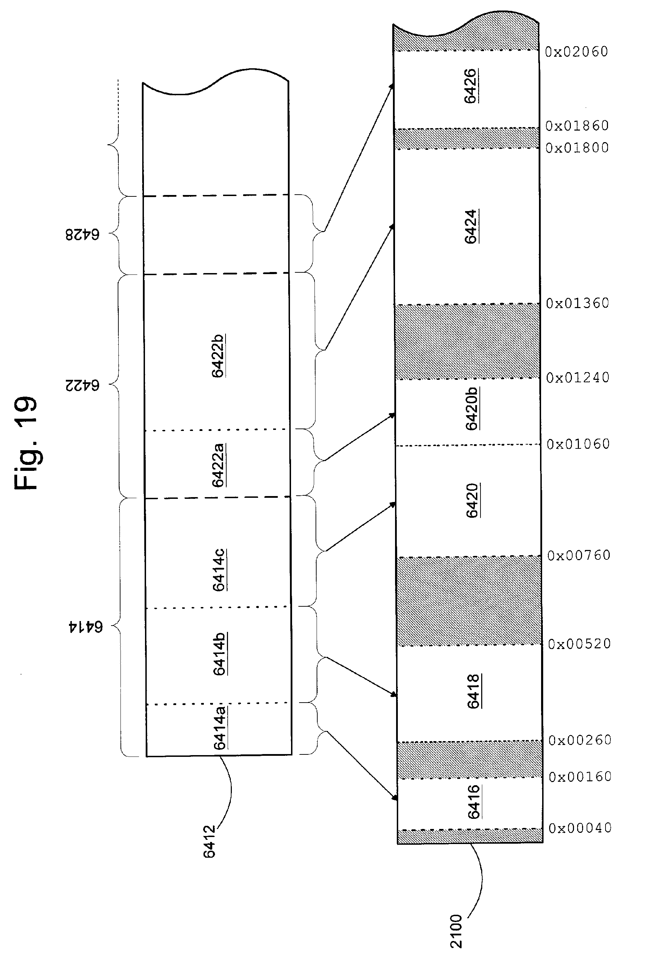

The procedure for reading a stored bit stream from the hard disk 2100 commences with the reading of a portion of the bit stream from a respective memory location of size much less than the actual or anticipated bit count of the bit stream, and continues with the reading of further portions from further respective memory locations until reading of the bit stream is terminated. This is shown in overview in Figure 19.

When playback is commenced (at step 6460), a playback thread 3858 is allocated to the playback of the desired file. The playback thread 3858 communicates with the file system library 3852 which determines (6462) the memory location at which the first portion of the stored thread is located and issues to the mass storage device 3758 a first reading command, of the form START_PLAYBACK(STREAM_ID, ADDRESS, LENGTH), to initiate playback of the file from the hard disk 2100. STREAM_ID is the memory address of the stream (output stream 6406) to which the file should be streamed; ADDRESS is the address on the hard disk 2100 from which data is to be read; and LENGTH is the amount of data to be read. The specified portion of data is then read from the mass hard disk 2100 (6464).

The START_PLAYBACK command also returns a handle, TRANSFER_HANDLE, identifying the transfer process for future reference.

When the file system library 3852 receives confirmation that the command has been executed, for example via an event or an interrupt raised by the mass storage device 3728, and if playback of the bit stream has not been terminated (determined at 6466) a second command of the form CONT_PLAYBACK(TRANSFER_HANDLE, ADDRESS, LENGTH) is sent by the file system library 3852 to the mass storage device 3758 to continue playback of the file. The ADDRESS parameter to this command indicates the address from which the next portion of data is to be read; and the LENGTH parameter indicates the amount of data to be read from that address. Commands of this second type continue to be made, once the preceding command is executed, until the complete file has been played back, or until playback is terminated by the user.

When the file to be played back is stored in multiple fragments on the hard disk 2100, the ADDRESS parameter of the commands may correspond to the first address in a fragment, and the LENGTH parameter may correspond to the size of the fragment, as described above. Alternatively, a single fragment could be read using multiple commands, reading contiguous portions of the fragment.

Furthermore, playback commands may pass as parameters lists of addresses and lengths, corresponding to the first address in a number of fragments and the sizes of those fragments.

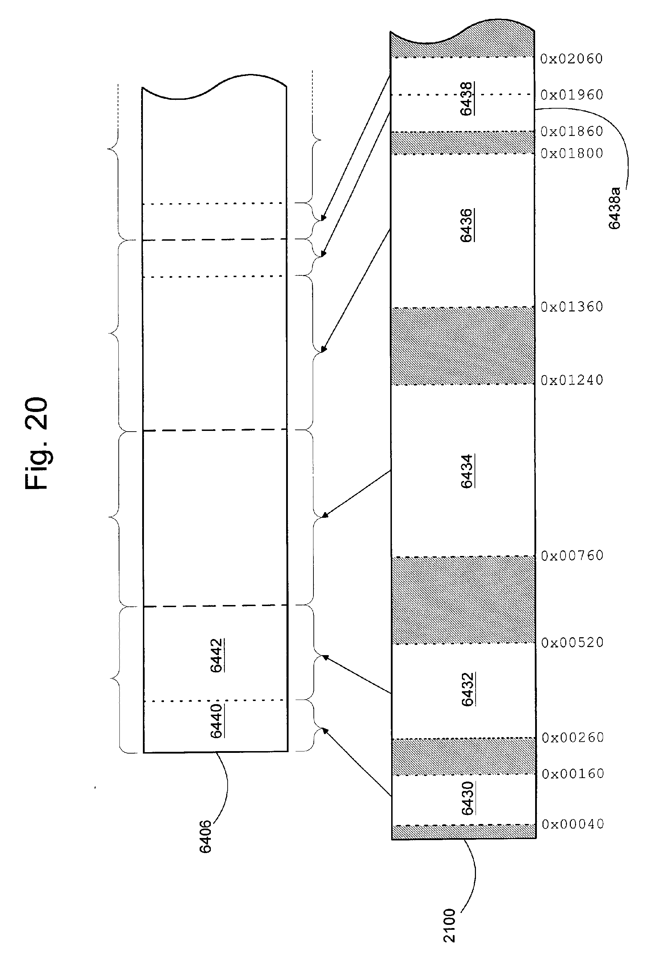

The reading of a bit stream from the hard disk 2100 will now be further described with reference to Figure 20.

A bit stream is stored in non-contiguous fragments of a hard disk 2100; five fragments 6430, 6432, 6434, 6436 and 6438 are shown. In order to read the stored bit stream, the file system library issues the first command START_PLAYBACK (OUTPUT_STREAM_ID, [0x00040, 0x00260], [0x120, 0x2C0]). This command reads a first portion of the bit stream in two blocks 6440, 6442 from the first and second fragments 6430, 6432. The two blocks 6440, 6442 are written to the output stream 6406. Once this first command has been executed, the mass storage device 3758 raises an event indicating to the file system library 3852 that the data has been read successfully.

The file system library 3852 then issues a second command CONT_PLAYBACK (TRANSFER_HANDLE, [0x00760], [0xAE0]). Data is then read from the third fragment 6434 and written to the output stream 6406 and the mass storage device 3758 raises a further event. The next command, CONT_PLAYBACK (TRANSFER_HANDLE, [0x01360, 0x1860], [0x4A0, 0x100]), causes the reading of data from the fourth fragment 6436 and a first block 6438a of the fifth fragment 6438. This data is also written to the output stream 6406.

The reading of the bit stream continues in this way, beginning with the remaining data from the fifth fragment 6438, until the whole of the required bit stream has been read, or reading of the bit stream is terminated for any reason.

A similar process may be used to read stored data from the hard disk.

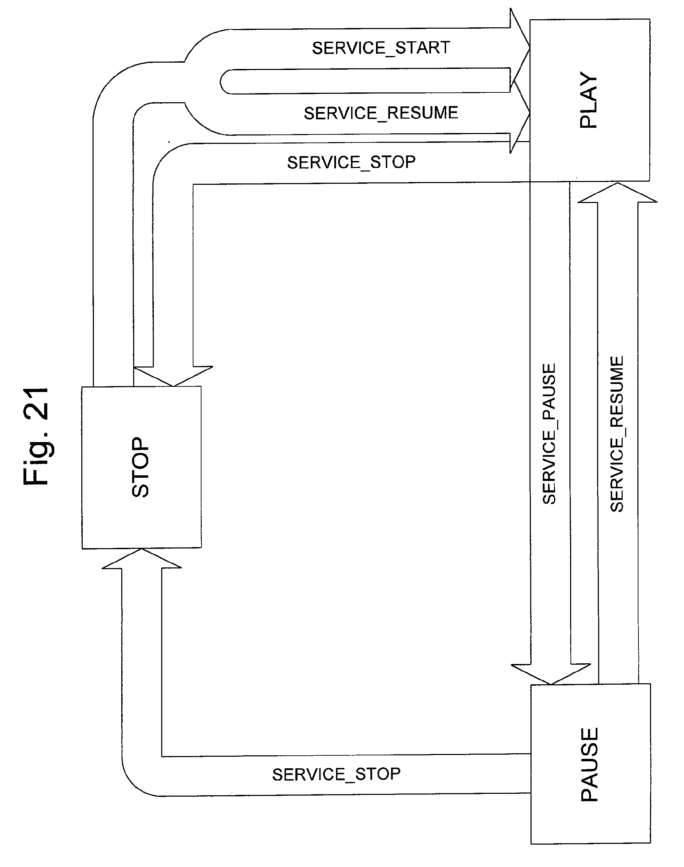

The use of service and video devices, especially to control the playback of content using mass storage systems described above, will now be described in some detail, with reference to Figures 21 to 23. In particular, the use of different methods of synchronisation will also be described.

### Service manipulation

The manipulation of a service will now be described by way of background. The presentation of a service is coordinated by two embodiments, the video device 3734 and the service device 3736 described below. An MPEG bit stream is fed to the demultiplexer 2010 which is partly under the control of the service device 3736. The service device encapsulates much of the functionality of the various hardware components required to demultiplex the components of a service, to decompress the audio and video packets, to descramble any scrambled components, to pause and resume the processing of the service's main components, to activate, deactivate and configure the copy protect system, to manage synchronisation of the components of the service and to manage the MPEG variables and to coordinate that functionality.

In "push" mode, the demultiplexer 2010 is controlled to extract the main video sequence (that is to say the video PID sequence) and other components (such as audio, subtitles, and so on) from the MPEG video bit stream, and then feed the audio and video components into MPEG decoder where it is decoded. Alternatively, in "pull" mode, the main video and audio sequences may be extracted from one or more FIFOs which in turn receive the main video and audio sequences from a hard disk, for example.

The video device 3734 plays a part in the control of the display of the main video sequence, as described further below.

### The service device

The service device 3736 encapsulates a number of the mechanisms necessary for the receiver/decoder to function as a virtual video recorder. This function is performed under the control of the PVR application 3154 using an interface including a number of commands described below. The service device receives commands from the PVR application and issues commands to the hardware components involved in processing a service (that is the tuner, the remultiplexer, the demultiplexer and so on).

At any time, the service device 3736 may be in one of three function modes (see Figure 21 which also shows the commands causing transitions between these function modes):
- *STOP function mode:* the device is in this function mode after a SERVICE_STOP command and before a SERVICE_START or SERVICE_RESUME command.
- *PLAY function mode:* the device is in this function mode between a SERVICE_START or SERVICE-RESUME command and a SERVICE_STOP or SERVICE_PAUSE command.
- *PAUSE function mode:* the device is in this function mode between a SERVICE_PAUSE command and a SERVICE_RESUME command which are aimed at suspending and resuming the processing of the service's main components, and between a SERVICE_PAUSE command and a SERVICE_STOP command.

Service device commands and events will now be described.

The service device provides the following commands which may be called, for example, by the PVR application 3154.

The *SERVICE_STOP* synchronous command instructs the service device 3736 to stop the processing of the service's main components. As shown in Figure 21, the command may be called when the service device is in the PLAY or the PAUSE function mode, from which it causes a move to the STOP function mode.

If the service device 3736 was in the PLAY function mode when the SERVICE_STOP command was called, the device halts the demultiplexing, decompression and descrambling of the various components of the service. If the service device was in the PAUSE function mode, these operations will already have been halted. In both cases, the device will then delete the currently displayed video frame and halt the video display process. Data which was queued for decompression when the command was called are discarded.

The *SERVICE_PAUSE* asynchronous command instructs the service device 3736 to suspend the processing of the main components of a service. The device first freezes the display of the next video frame decoded after the command is called. As soon as this frame is frozen, the device also mutes the audio. The demultiplexing, decompression and descrambling of the various components of the service are also then halted.

An alternative order of events is also possible, in which the demultiplexing of the service components is halted first. The decoding of data which has already been demultiplexed continues until the last displayable frame (the last frame for which all video data has been demultiplexed) is found. This frame is then displayed and frozen, the audio is muted and the decoding of all components is halted.

In either case, all data which was queued for decompression at the moment the video display is frozen is retained in order to prevent any discontinuity should the SERVICE_RESUME command be called.

When the SERVICE_PAUSE command is issued for a service being received in "push" mode, as described in more detail later, the SERVICE device sends appropriate commands to the TS_REMUX device in charge of the remultiplexers (to commence the recording of the stream), the FIFO device 3744 (to configure the buffers between the demultiplexers, remultiplexers and hard disk), and the DEMUX device (to set the input to the demultipexer which is connected via the FIFOs to the hard disk).

The SERVICE_PAUSE command may only be called when the service device is in the PLAY function mode. The transition to the PAUSE function mode only occurs when one of the above-described sequences has occurred and the successful asynchronous event has been generated. Once in the PAUSE function mode, the service device 3736 may move back to the PLAY function mode after a successful call to the SERVICE_RESUME command, or to the STOP function mode after a successful call to the SERVICE_STOP command.

The *SERVICE_RESUME* asynchronous command instructs the service device 3736 to resume (or to start) the processing of the main components of a service. When this command is called, the device (re)starts the demultiplexing, decompression and descrambling of the various component of the service, and then (re)starts the display of the video with the next decoded frame of a specified type (intra, reference, and so on).

This command may be called when the service device 3736 is in the PAUSE function mode or the STOP function mode and it causes an immediate move to the PLAY function mode.

When the SERVICE_RESUME command is called, a restart mode is specified, which tells the service device whether or not to flush the decoders on restart. Such a flushing ofthe decoders causes a discontinuity in playback, and is used when the decoding source changes (for example, when the system is playing live, is then paused and then resumed from hard disk).

Otherwise, the resuming process described above is effected without discontinuity; the frozen frame is displayed until the service device 3736 has a new valid frame to display. As soon as this new frame is displayed, the audio mute is cancelled and the successful asynchronous event is generated indicating that resumption of the service has been completed. This resumption without flushing is undertaken when, for example, the system is playing from hard disk, is then paused, and is then resumed again from hard disk.

Notwithstanding the above, if the SERVICE_PLAY or the SERVICE_RESUME command is called when the VideoMode parameter (see below) of the video sequence being displayed by the video device 3734 has the value SINGLE_FRAME, the service device 3736 (re)starts the demultiplexing, decompression and descrambling of the various component of the service until the next video frame has been decoded and displayed. This frame is then frozen and the processing of the components of the service is suspended without any data being discarded. The successful asynchronous event is sent once this suspension is complete, and the service device 3736 moves to the PAUSE function mode.

During the execution of the SERVICE_PAUSE and SERVICE_RESUME commands, most other commands - including themselves - are refused. "During the execution" means between the command call and the moment when the IO event indicating the end of the command is received by the application.

In addition to these commands reflecting closely some of the functions of a video recorder, the certain further commands and events are provided as described below.

The *SERVICE_SET_PID* synchronous command informs the device of the PIDs of the main components of the service to be manipulated (and therefore to be demultiplexed). This function can only be called when the service device is in STOP or PAUSE mode and it does not change this mode.

When this function is called, it passes a parameter indicating the PIDs of the main components (video, audio, teletext, subtitle, PCR and superimpose) of the service to be manipulated.

The *EV_SERVICE_OFF* event is sent by the service device 3736 to signal a decoding problem about one of the service's components (for example, the absence of data, incorrect data or bandwidth overflow). This event is sent only when the device is in PLAY function mode and when:
- no data is carried by the PID allocated to a primary component of the service;
- incorrect data is carried by this PID; or
- the requested VideoSpeed set by VIDEO_CHANGE_SPEED command of the video device (described below) is too fast (that is to say that the maximum bandwidth of the hardware involved in the service playing (demultiplexers/decoders) has been reached).

This event should also be sent in each of the following circumstances:
- A PID which carried correct data ceases to carry any data;
- A PID which carried correct data ceases to carry correct data;
- A PID carrying no data commences carrying incorrect data; or
- Manipulation of a PID carrying correct data exceeds the maximum bandwidth.

If the EV_SERVICE_OFF event is sent because of a bandwidth problem, the PID specified by the event corresponds to the PID of the video component; otherwise, the PID specified by the event is the PID of the component for which there is a problem.

The *EV_SERVICE_ON* event is sent by the device to signal the correct decoding of one of the service's components. This event is sent only when the service device 3736 is in PLAY function mode and when the PID of a primary component is correct.

For the video PID, another condition for the sending of this event is that the requested VideoSpeed set by VIDEO_CHANGE_SPEED command (described below) of the video device 3734 is not too fast (that is to say that the maximum bandwidth of the hardware involved in the service manipulation (demultiplexers/decoders) has not yet been reached.

This event is sent in each of the following circumstances (and for each primary component):
- a PID which carried no data commences carrying correct data (and the maximum bandwidth has not been reached;
- a PID which carried incorrect data commences carrying correct data (and the maximum bandwidth has not been reached; or
- the bandwidth required moves from above the maximum, and correct data is carried by the PID of a primary component.

As with the EV_SERVICE_OFF event, if the event is sent because of a bandwidth problem (now corrected), the PID specified by the event corresponds to the PID of the video component; otherwise, the PID specified by the event is the PID of the component for which there has been a problem.

The *SERVICE_SET_SYNCHRO* synchronous command allows the application to program the synchronisation mode of the service device 3736; various synchronisation modes are described later. This command may be called in any of the 3 function modes (STOP, PLAY, PAUSE) of the service device. When called in PLAY function mode, the new synchronisation mode is applied immediately after the call. If the desired synchronisation mode can not be applied because the PID of the related component (PCR, video, audio) is not being demultiplexed, the Synchronisation disabled mode is applied automatically by the device. If the synchronisation mode applied by the device is modified an EV_SERVICE_SYNCHRO event (described below) is sent.

If the command is called in PAUSE or STOP function mode, the desired synchronisation mode is saved by the device and applied (if possible) when the device moves to the PLAY mode. If it is not possible to apply the desired mode, the Synchronisation disabled mode will be applied. The EV_SERVICE_SYNCHRO event (described below) is sent when the device moves to the PLAY function mode if the synchronisation mode applied by the device is modified.

The *SERVICE_GET_SYNCHRO* synchronous command enables the PVR application 3154 to determine which synchronisation mode it is intended that the service device should be applying and which mode is actually being applied by the service device. It returns two parameters:
- SYNCHRO_PROG which indicates the synchronisation mode currently programmed for example by a previous call to SERVICE_SET_SYNCHRO command; and
- SYNCHRO_REAL which indicates the synchronisation mode actually being applied by the device.

The synchronisation mode applied by the device may be different from the one programmed by a previous call to SERVICE_SET_SYNCHRO command if the PID of the related component (PCR, video, audio) is not demultiplexed. In this case, Synchronisation mode disabled is applied as described above.

This command may be called in any of the three function modes (STOP, PLAY, PAUSE) of the service device. In PAUSE or STOP function mode, the device is not applying a synchronisation mode; the returned SYNCHRO_REAL parameter then indicates the synchronisation mode applied by the device it was last in the PLAY function mode.

The *EV_SERVICE_SYNCHRO* event is sent by the service device 3736 to signal that the synchronisation mode applied by the device has changed. This can only happen when the device is in PLAY function mode and:
- the application has called SERVICE_SET_SYNCHRO command inducing a change in the synchronisation mode applied by the device;
- the device has automatically changed the applied synchronisation mode to Synchronisation disabled mode because the PID of the component (PCR, video, audio) supporting the synchronisation mode programmed is no longer being demultiplexed; or
- the device has automatically changed the applied synchronisation mode from Synchronisation disabled mode to the synchronisation mode programmed because the PID of the related component (PCR, video, audio) which was not demultiplexed has commenced being demultiplexed.

This event is never sent in PAUSE or STOP function modes. If the SERVICE_SET_SYNCHRO command is called while the device is in one of these modes, EV_SERVICE_SYNCHRO will only be sent when the device moves into PLAY function mode and only if the synchronisation mode applied by the device changes.

### The video device

The video device 3734 also encapsulates a number of the mechanisms necessary for the receiver/decoder to function as a virtual video recorder. In order to control the display of the main video sequence, the video device comprises a number of commands which may be called for example by the PVR application 3154 or by the service device 3736.

The *VIDEO_FREEZE* synchronous command serves to freeze the display of the main video sequence. When this command is called, the next decoded frame of the main video sequence is frozen on the display, but the decoding of the sequence proceeds. This command may only be called when the service device 3736 is in the PLAY function mode.

The *VIDEO_CONTINUE* synchronous command effectively reverses the VIDEO_FREEZE command in that it causes the display of the sequence to be recommenced once the next I-frame of the sequence is decoded. However, if the VideoMode property of the sequence has been set to NO_VIDEO (see VIDEO_CHANGE_MODE command below), nothing further will be displayed on the screen after this command is called.

The *VIDEO_CHANGE_MODE* synchronous command changes the VideoMode property of a video sequence. This property can have one of five values:
- NORMAL_VIDEO: in which all (B-, I- and P-) frames are displayed (this is the default mode);
- INTRA_VIDEO: in which only the I-frames are displayed;
- SCAN_IP_VIDEO: in which only the I- and P-frames are displayed;
- NO_VIDEO: in which the video is decoded but not displayed; and
- SINGLE_FRAME: in which the video is displayed frame by frame.

If no main video sequence is being decoded and displayed at the moment of the call (for example, if no video PID has been set, the service device 3736 is in STOP or PAUSE mode, or the video is frozen), the new VideoMode value is stored until and applied when the decoding and display of the sequence (re)commences.

If the main video sequence is being decoded and displayed when the command is called, then the new mode is applied directly after the call.

In single-frame mode, this command can only be issued during the STOP or PAUSE state. By contrast, in modes other than the single-frame mode, this command can only be issued during the PLAY state.

The *VIDEO_CHANGE_SPEED* synchronous command changes the speed at which the video sequence is displayed. The command has a signed parameter, VideoSpeed, which represents the speed at which the sequence should be displayed. When this command is called in respect of a video sequence, a VideoSpeed property of that sequence is set to the value of the VideoSpeed parameter of the command. A positive value represents a factor by which normal speed should be multiplied, and a negative value represents a factor by which normal speed should be divided:

| Value of VideoSpeed parameter | Effect |
|---|---|
| 0x00 (= 0) | Speed factor 0 (NULL = Normal speed) |
| 0x01 (= 1) | Speed factor 1 (=NULL = Normal speed) |
| 0x02 (= 2) | Speed factor 2 (twice normal speed) |
| ... | |
| Ox7F (= 127) | Speed factor 127 (127 times normal speed) |
| 0x80 (= -128) | Speed factor 128 (1/128 times normal speed) |
| ... | |
| 0xFE (= -2) | Speed factor 2 (half normal speed) |
| 0xFF (= -1) | Speed factor 1 (=NULL = Normal speed) |

If no main video sequence is being decoded and displayed when the command is called (for example, because no video PID is set, the service device is not in PLAY function mode or the video is frozen), the new speed is stored and is applied when the decoding and display of the sequence (re)commences.

If the main video sequence is being decoded and displayed when the command is called, the new speed is applied directly after the call.

### Synchronisation modes

When processing a service with more than one component, for example an audio and a video component, it is desirable to synchronise the presentation of those components, for example so that lip sync is established. In the preferred embodiment, only one video component and one audio component may simultaneously be decoded by the MPEG decoder. In a variant of the preferred embodiment, however, it is possible to decode at least two audio components, at least two video components, or any combination of audio and video components simultaneously. In this case, it is desirable to ensure that these components are also presented at the same time relative to one another.

In the case of a transport stream, for example a multi-channel transport stream being received from a head end, the transport stream contains PCR (program clock reference) packets which are samples of a first system time clock (STC) at the head end running at 27MHz. These PCRs are used to synchronise a second system time clock (STC) coupled to the decoder with the STC at the encoder.

The transport stream multiplexer periodically samples the first STC (usually at intervals no greater than 700µs) and places a PCR packet containing the value of the clock into the transport stream. The demultiplexer at the receiver/decoder extracts the PCRs from the transport stream in the order in which they were inserted and uses the values from the PCRs to set the second STC.

The elementary stream packets of a service contain PTSs (presentation time stamps) which contain a value indicating the time at which the data carried by the packet should be presented by comparison with the second (local) STC.

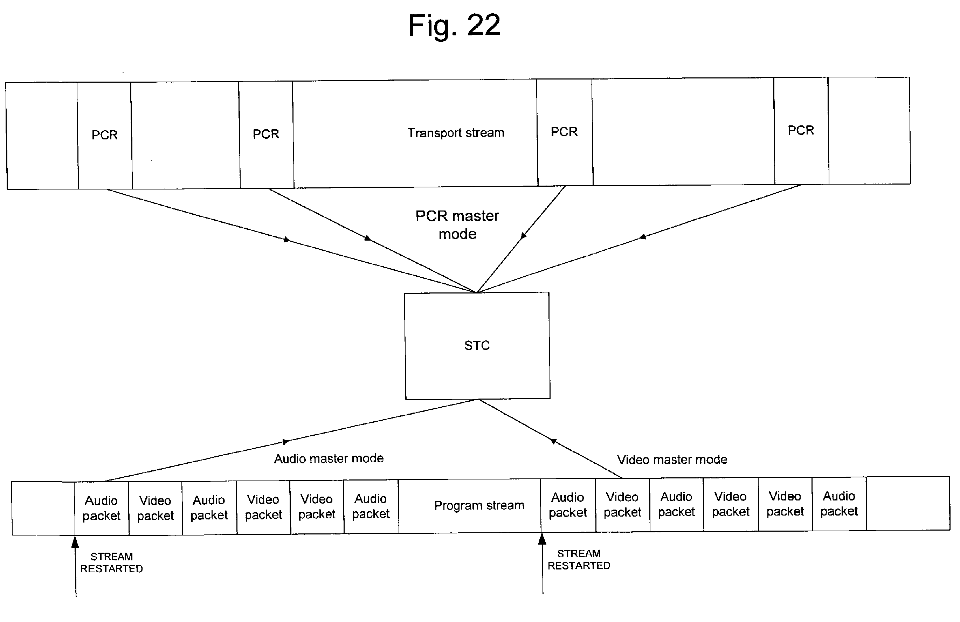

As indicated above, the service device 3736 of an embodiment may apply a number of synchronisation modes to the service being manipulated. These modes are illustrated in Figure 22 as follows:
- *PCR master synchronisation mode* (default mode, used in push mode), as described above;
- the *Video master synchronisation mode,* in which the PTS of a video stream (rather than a PCR) is used to regulate the STC - this mode is commonly used when the transport stream is coming from a mass storage medium (such as a hard disk drive) via a FIFO, that is in pull mode;
- the *Audio master synchronisation mode,* in which the PTS of an audio stream is used to synchronise the STC ― this mode is also commonly used when the transport stream is coming from a mass storage medium, that is in pull mode; and
- the *Synchronisation disabled mode,* in which there is no synchronisation between the different components of the service.

As stated above, the video master mode and the audio master mode are two forms of a general, second "elementary stream mode" which are commonly used when the transport stream is retrieved from a mass storage medium, for example a hard disk. In video master mode, for example, the video packets of a video stream are presented in order (with reference to their PTSs). When the video stream is presented, the first PTS at the starting point is of the stream is used to set the receiver/decoder STC, and the STC then runs normally until the stream is stopped and restarted (and a further PTS is used to set the STC). The audio stream (and the other elementary streams) are then presented at times determined by comparing their PTSs with the STC. In audio master mode, the PTSs from an audio stream are used to set the STC in a similar manner.

The synchronisation mode is selected using a SERVICE_SET_SYNCHRO command (described above). If the desired synchronisation mode cannot be applied because the PID of the related component (PCR, video, audio) is not being demultiplexed at the time of the call, the Synchronisation disabled mode is applied by the device. If demultiplexing of that PID is later commenced, the selected synchronisation mode is then applied.

Service management using synchronisation modes will now be described.

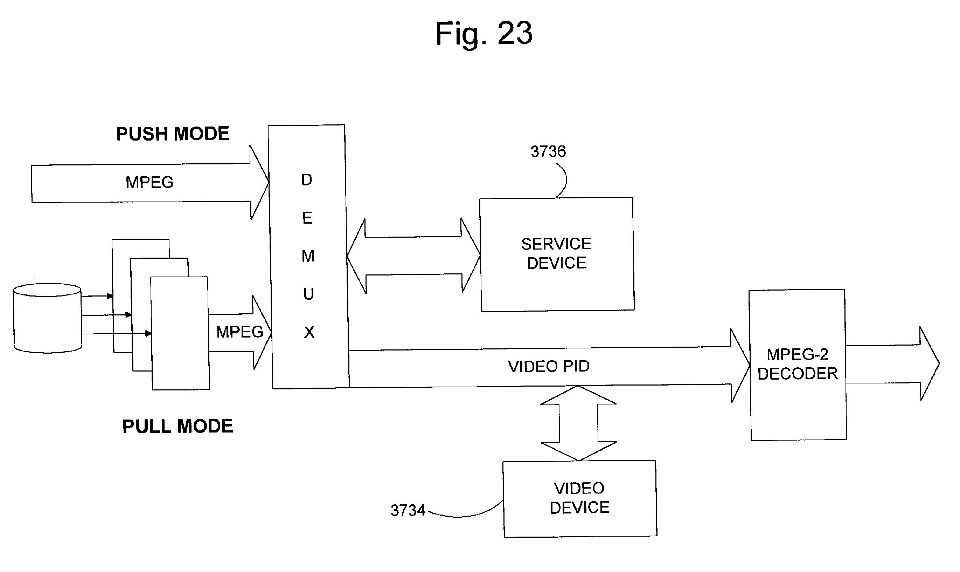

The ability to switch between synchronisation modes, described above, finds application when it is desired to process a service in a pull mode and in particular when switching between a push mode and pull mode, as shown in Figure 23.

A user watching a programme in push mode (in which the service will usually be synchronised in the PCR master mode described above) may at some time decide to defer continuing to watch the programme until some later time. The desire to do this may be communicated to the receiver/decoder for example by pressing a "pause" button on a remote control. Upon communication of this request, the receiver/decoder ceases presentation of the programme and commences storage of the programme as described above.

When the user decides to resume viewing of the programme, he may communicate this to the receiver/decoder by pressing a "resume" button on a remote control. The receiver/decoder then resumes presentation of the programme, this time in pull mode, synchronising presentation of the components of the programme for example in audio or video master synchronisation mode (described above). The user may change the speed of presentation of the programme and rewind (as far as the point at which the "pause" button was pressed) or fast forward (as far as the "live point", that is the point in the programme which is currently being received). If the user wishes to return to push mode viewing, he may do this directly, for example by pressing a "live" button on a remote control. However, if the programme is a football match, for example, it is likely that the viewer will not want to miss the action which has been stored and not yet viewed. The viewer may therefore choose to view the stored material at a rate accelerated by a factor of his choosing, until the "live point" is reached. The receiver/decoder then reverts to push mode and the service device will usually revert to PCR master synchronisation mode.

Alternatively, a viewer may wish during push mode viewing of a programme to reduce the speed of presentation of the programme (for example during the an attack on goal in a football match). This may be achieved by pressing a "slow-mo" button on a remote control. In this case, the receiver/decoder first switches from push mode to pull mode to start recording the programme, and then starts playback from the stored programme at a reduced speed compared to the normal presentation speed of the programme.

The precise details of the implementation of the various functions described above, and their distribution between hardware and software, are a matter of choice for the implementor and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features and the precise details are left to the implementor. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. Routing apparatus for routing data in a receiver/decoder, comprising means for receiving realtime user routing control information and means for routing the data from an input to an output, to storage means, and to both the output and the storage means in accordance with the received realtime user routing control information.

2. Routing apparatus according to Claim 1, further comprising means for writing data to the storage means.

3. Routing apparatus according to Claim 1 or 2, further comprising means for retrieving data from the storage means.

4. Routing apparatus according to any of the preceding claims, wherein the routing means is adapted to route data from the storage means to the output.

5. Routing apparatus according to any of the preceding claims, wherein the routing means is adapted to route data to a time-shift storage area, to a record storage area, and to both the time-shift and the record storage areas, of the storage means.

6. Routing apparatus according to Claim 5, wherein the routing means is further adapted to route data from the time-shift storage area and the record storage area to the output.

7. Routing apparatus according to any of the preceding claims, further comprising means for receiving user time-shift control instructions.

8. Routing apparatus according to Claim 7, wherein the routing means is adapted to route data to the storage means on the basis of the received user time-shift control instructions.

9. Routing apparatus according to Claim 7 or 8, wherein the user time-shift control instructions comprise at least any of the following instructions: pause; play; rewind and forward.

10. Routing apparatus according to any of the preceding claims, comprising means in the form of a single user interface for receiving realtime user routing control information and user time-shift control instructions.

11. Routing apparatus according to any of the preceding claims, further comprising at least one further input, and wherein the routing means is adapted, for each input, to route data from that input to the output, to the storage means, and to both the output and the storage means.

12. Routing apparatus according to Claim 11, wherein the routing means is adapted to route data from each input independently of data from other inputs.

13. Routing apparatus according to any of the preceding claims, wherein the output includes means for combining data to produce composite data.

14. Routing apparatus according to Claim 13, wherein the combining means is adapted to combine data from any of the following sources: the input; at least one further input; the storage means; and at least one further storage means.

15. Routing apparatus according to any of the preceding claims, wherein the output is adapted for connection to a display means.

16. Routing apparatus according to any of the preceding claims, wherein the output includes at least two output ports, each connectable to separate display means, and wherein the output is adapted to transfer data routed to the output from any of the following respective sources to each separate display means: the input; at least one further input; the storage means; and at least one further storage means.

17. Routing apparatus according to any of the preceding claims, wherein the routing means is further adapted to dynamically interconnect the input to the output, to the storage means, and to both the output and the storage means.

18. Routing apparatus for routing data in a receiver/decoder, comprising means for dynamically interconnecting an input to an output, to storage means, and to both the output and storage means.

19. Routing apparatus according to Claim 17 or 18, further comprising means for receiving realtime user routing control information, and wherein the interconnecting means comprises routing means adapted to route data from the input to the output, to the storage means, and to both the output and the storage means in accordance with the received realtime user routing control information.

20. Routing apparatus according to any of the preceding claims, embodied in software.

21. A receiver/decoder incorporating routing apparatus according to any of the preceding claims.

22. A method of routing data in a receiver/decoder, the method comprising receiving realtime user routing control information, and routing the data from an input to an output, to storage means, and to both the output and storage means in accordance with the received realtime user routing control information.

23. A method of routing data in a receiver/decoder, the method comprising dynamically interconnecting an input to an output, to storage means, and to both the output and storage means.

24. A command for controlling a data transfer of a bit stream between a source and a destination, the command being adapted to change at least one of the source and destination of the transfer.

25. A command according to Claim 24, wherein at least one of the source and the destination is a location in a storage medium.

26. A command according to Claim 24, the command being adapted to extend the transfer.

27. A command for controlling a data transfer of a bit stream between a source and a destination, the command being adapted to extend the transfer.

28. A command according to any of claims 24 to 27, comprising a reference to the transfer.

29. A command according to any of claims 24 to 28, comprising a reference to a new at least one of the source and destination.

30. A controller comprising means for generating a command as claimed in any of claims 24 to 29.

31. A controller as claimed in Claim 30, further comprising means for generating a command to initiate a transfer between a source and a destination.

32. A controller as claimed in Claim 30 or Claim 31, wherein the destination is a storage location, the controller being adapted to issue the command before the storage location is full.

33. A controller according to Claim 30 or Claim 31, wherein the destination is a storage location, and comprising means for generating an event indicating that the storage location is full.

34. A controller according to Claim 33, adapted to issue the command when the event is generated.

35. A receiver/decoder comprising a storage medium and a controller as claimed in any of claims 30 to 34.

36. A method of storing a section of an incoming bit stream in a receiver/decoder comprising a process controller and a storage device, comprising the steps of assigning a respective memory location of size much less than an actual or an anticipated bit count of the defined bit stream section and storing a corresponding portion of the incoming bit stream at said location, the steps being repeated until the storage of the bit stream is terminated, thereby to limit the extent of memory assigned during the storage of the bit stream but not employed for storage.

37. A method of reading a programme or other defined section of a stored bit stream in a receiver/decoder comprising a process controller and a storage device, the method comprising the steps of reading a portion of the bit stream from a respective memory location of size much less than the actual or an anticipated bit count of the bit stream, this step being repeated until the reading of the bit stream is terminated.

38. A receiver/decoder comprising a process controller, a storage device, a user interface which permits the user to initiate or terminate storage of a programme or other defined section of a bit stream on a storage device, the receiver/decoder being adapted to store the bit stream in appropriate memory locations within the storage device by assigning a respective memory location of size much less than the actual or an anticipated bit count of the defined bit stream section and storing a corresponding portion of the incoming bit stream at said location, the steps being repeated until the storage of the bit stream is terminated, thereby to limit the extent of memory assigned during the storage of the bit stream but not employed for storage.

39. A receiver/decoder comprising a process controller, a storage device, a user interface which permits the user to initiate or terminate playback of a programme or other defined section of a bit stream on a storage device, the receiver/decoder being adapted to read a portion of the bit stream from a respective memory location of size much less than the actual or an anticipated bit count ofthe defined bit stream section, this step being repeated until the playback is terminated.

40. Apparatus for receiving and processing data comprising means for receiving the data and means for synchronising the data in two or more different modes.

41. Apparatus according to Claim 40, comprising means for switching between synchronisation modes during processing of a service.

42. Apparatus according to Claim 41, wherein the means for switching is adapted to be switchable between synchronisation modes in response to user input.

43. Apparatus according to Claim 41, wherein the means for switching is adapted to be switchable between synchronisation modes in response to an error signal.

44. Apparatus according to any of claims 40 to 43, comprising a clock and means for regulating the clock.

45. Apparatus according to Claim 44, comprising means for receiving clock regulation signals, and adapted in a first synchronisation mode to regulate the clock in dependence upon the clock regulation signals.

46. Apparatus according to Claim 45, further adapted in the first synchronisation mode to process the data in dependence upon the regulated clock.

47. Apparatus according to Claim 46, wherein the data is audio/visual data, comprising means for receiving time stamp information in relation to a first component of the audio/visual data, and adapted in a second synchronisation mode to regulate the clock in dependence upon the time stamp information.

48. Apparatus according to Claim 47, further adapted in the second synchronisation mode to regulate at least one other component of the data in dependence upon the regulated clock.

49. Apparatus according to any of Claims 40 to 48, adapted to receive and process audio/visual data.

50. Apparatus according to any of Claims 40 to 49, adapted to receive and process data in the form of multiplexed packetised elementary streams.

51. Apparatus according to Claim 50, adapted to receive and process an MPEG transport stream.

52. Apparatus according to Claim 50, wherein the data is an MPEG program stream.

53. Apparatus according to any of claims 40 to 52, adapted to receive digital television data.

54. Apparatus according to any of claims 40 to 53, adapted to receive data from a local storage device.

55. A receiver/decoder comprising apparatus as claimed in any of claims 40 to 54.

56. A receiver/decoder according to claim 55, further comprising a storage device.

57. A receiver/decoder according to claim 56, wherein the storage device is a hard disk.

58. A video device adapted to regulate the speed of presentation of a video sequence being displayed.

59. A video device according to Claim 58 comprising speed regulating means for causing the video device to change the speed of presentation of a video sequence.

60. A video device according to Claim 58 or 59, adapted to regulate types of frames of a video sequence to be displayed.

61. A video device according to Claim 60, comprising video mode setting means for specifying the types of frames of a video sequence to be displayed.

62. A video device according to any of Claims 58 to 60, adapted to display and hold a single frame.

63. A service device embodied in software comprising means for receiving a command and means for issuing a command to a plurality of other devices.

64. A service device according to Claim 63, adapted to regulate the processing of data.

65. A service device according to Claim 64, operable in more than one function mode.

66. A service device according to Claim 65, wherein the data is audio/visual data.

67. A service device according to Claim 66, operable in a stop function mode in which the data is not processed.

68. A service device according to Claim 66 or Claim 67, operable in a play function mode in which the data is processed.

69. A service device according to any of Claims 64 to 66, operable in a pause function mode in which processing of the data is suspended.

70. A service device according to any of Claims 63 to 69, wherein the means for receiving a command is adapted to receive the command from an application.

71. A service device according to any of Claims 63 to 70, wherein the means for issuing a command is adapted to issue the command to an item of hardware.

72. A computer program product adapted to carry out the method as claimed in any of Claims 22, 23, 36 and 37.

73. A computer readable medium having stored thereon a computer program product as claimed in Claim 72.

74. A signal tangibly embodying a computer program product as claimed in Claim 72.

75. A broadcast system, comprising a broadcast centre and a receiver/decoder according to any of Claims 21, 38, 39, 55, 56 and 57.
